# EUROPÄISCHE PATENTSCHRIFT

(11) **EP 4 170 303 B1**
(45) Veröffentlichungstag und Bekanntmachung des Hinweises auf die Patenterteilung: **04.12.2024**
(21) Anmeldenummer: 22213867.9
(22) Anmeldetag: 27.07.2018
(51) Int. Cl.: G01J 3/46, G06F 16/28

(54) **VERFAHREN UND SYSTEM ZUM ERMITTELN EINES FARBTONS**
METHOD AND SYSTEM FOR DETERMINING A HUE
PROCÉDÉ ET SYSTÈME DE DÉTERMINATION D'UNE TEINTE

(43) Veröffentlichungstag der Anmeldung: 26.04.2023
(62) Teilanmeldung aus: 18186165.9
(73) Patentinhaber: hubergroup Deutschland GmbH, 85551 Kirchheim-Heimstetten (DE)
(72) Erfinder: HÜBEL, Patrick, 85586 Poing (DE)
(74) Vertreter: Henkel & Partner mbB

(56) Entgegenhaltungen:
- EP-A1- 1 248 087
- US-A1- 2006 012 810
- US-A1- 2010 067 056
- US-B1- 6 330 342

## Beschreibung

Die vorliegende Erfindung betrifft eine Datenverarbeitungsvorrichtung zum Ermitteln einer Farbrezeptur und zur Qualitätskontrolle der hergestellten Farbrezeptur, welche nach der Applikation mit einem vorgegebenen Applikationsverfahren auf ein vorgegebenes Substrat ein Farbprodukt mit einem vorgegebenen Farbton ergibt.

Systeme und Verfahren werden für verschiedenste Anwendungen eingesetzt, wie unter anderem in der Verpackungsentwicklung. Beispielsweise wird bei der Entwicklung einer Verpackung, wie zum Beispiel einer Lebensmittelverpackung, eine neue, farblich anspruchsvolle, mehrere Farben umfassende Gestaltung kreiert, deren exakte Herstellung es erfordert, dass die von dem Verpackungsentwickler vorgegebenen Farben bei dem Bedrucken der Verpackung mit den zur Wiedergabe der verschiedenen Farben eingesetzten Farbrezepturen exakt verwirklicht werden. Allerdings hängt der nach der Applikation einer Farbrezeptur mit einem Applikationsverfahren, also im Falle von Drucken der nach dem Drucken einer Druckfarbe auf ein Substrat erzielte Farbton von einer Vielzahl von Faktoren ab, wie insbesondere von der konkreten Art des Substrats und von dem eingesetzten Applikationsverfahren. Das Drucken einer Druckfarbe mit Flexodruck auf Pappe kann zu einem Druckprodukt mit einem signifikant anderen Farbton führen als beispielsweise das Drucken derselben Druckfarbe mit einem Tiefdruckverfahren auf gestrichenes Papier. Eine bekannte, den von dem Verpackungsentwickler geforderten Farbton ergebende Tiefdruckfarbe für Papier wird daher in der Regel auf die gewünschte Verpackungspappe mit einem Tiefdruckverfahren aufgebracht nicht zu dem gewünschten Farbton führen. Es muss daher eine den gewünschten Farbton ergebende Druckfarbe jeweils für das spezielle Substrat und das gewünschte Druckverfahren gefunden werden, oder, falls noch nicht vorhanden, entwickelt werden.

Neben dem sich nach der Applikation auf das Zielsubstrat mit dem vorgegebenen Applikationsverfahren ergebenden Wunschfarbton muss die für eine neue Anwendung, wie beispielsweise für eine neue Verpackung geeignete Farbrezeptur noch eine Vielzahl anderer Kriterien erfüllen. Je nach Anwendungszweck muss die Farbrezeptur beispielsweise einen vorgegebenen Glanzwert ergeben sowie sich durch eine mehr oder weniger ausgeprägte Chemikalienbeständigkeit oder eine mehr oder weniger ausgeprägte Beständigkeit gegenüber Licht auszeichnen, um nur einige der geforderten Anforderungen zu nennen.

Um es den Verpackungsentwicklern und anderen Anwendern trotz dieser komplexen Zusammenhänge zu erleichtern, für ein konkretes System eine geeignete Farbrezeptur zu finden, sind bereits Datenbanken und Computerprogramme entwickelt worden, die es einem Benutzer erlauben, gewünschte Zielparameter vorzugeben, wie den Zielfarbton, das Substrat, das Applikationsverfahren, mit dem die Farbrezeptur auf das Substrat aufgebracht werden soll, die geforderte Chemikalienbeständigkeit des nach der Applikation der Farbrezeptur auf das Substrat erhaltenen Farbprodukts und andere Parameter. Das Computerprogramm durchsucht dann die Datenbank nach einer geeigneten Farbrezeptur und zeigt diejenige Farbrezeptur an, die gemäß den in der Datenbank gespeicherten Informationen nach dem Aufbringen auf das Zielsubstrat mit dem vorgegebenen Applikationsverfahren ein Farbprodukt mit einem Farbton ergibt, der am nächsten an den geforderten Zielfarbton herankommt. Falls keine Farbrezeptur gefunden wird, die zumindest annähernd den gewünschten Zielfarbton ergibt, wird dem Benutzer angezeigt, dass kein Treffer gefunden wurde.

Ein solches Verfahren und System wird beispielsweise unter dem Handelsnamen PantoneLIVE vertrieben.

Aus der US 7,034,960 B2 ist ein Verfahren zum Verwenden einer Datenbank zum Entwickeln eines Farbprodukts bekannt, wobei das Verfahren die folgenden Schritte umfasst: i) Speichern von Entwicklungsinformationen in der Datenbank, wobei die Entwicklungsinformationen Eigenschaften bezogen auf die Entwicklung einer Vielzahl von Farbprodukten umfassen, ii) Empfangen von ersten Farbinformationen, welche wenigstens eine erste Farbe umfasst, iii) Identifizieren von ersten Entwicklungsinformationen in der Datenbank, wobei die ersten Entwicklungsinformationen wenigstens die erste Farbe umfassen, iv) Empfangen von wenigstens einer physikalischen Eigenschaft des Farbprodukts und v) Verwenden der ersten Entwicklungsinformationen zum Bestimmen, ob die wenigstens eine physikalische Eigenschaft mit der ersten Farbe kompatibel ist. Wenn die wenigstens eine physikalische Eigenschaft nicht mit der ersten Farbe kompatibel ist, wird das Verfahren entweder beendet oder es wird dem Benutzer eine Warnung angezeigt, dass wenigstens eine physikalische Eigenschaft nicht mit der ersten Farbe kompatibel ist. Der Benutzer kann dann seine gewünschte Gestaltung bzw. die Anforderungen an das Farbprodukt ändern, und zwar so oft, bis in der Datenbank ein entsprechender Treffer für eine Farbrezeptur gefunden wird. Letzteres ist jedoch keine befriedigende Lösung, da der Benutzer in diesem Fall nicht eine das von vornherein gewünschte Farbprodukt ergebende Farbrezeptur erhält.

Nachdem der Benutzer eine Farbrezeptur für sein geplantes Farbprodukt aus einem spezifischen Substrat, auf das die Farbrezeptur mit einem spezifischen Applikationsverfahren aufgebracht ist, erhält, wird diese Farbrezeptur üblicherweise an einen - unter Umständen in einem anderen Teil der Welt sitzenden - Farbenhersteller weitergeleitet, damit dieser dann die Farbe herstellt.

Üblicherweise wird dem Benutzer die Farbrezeptur als Mischungsrezeptur aus mehreren Halbfertigprodukten angezeigt, die beispielsweise von dem Vertreiber des Computerprogramms, mit dem die Farbrezeptur mit einem vorgenannten Verfahren ermittelt worden ist, kommerziell vertrieben werden. Eine solche Farbrezeptur kann zum Beispiel aus zwei bis fünf Farbmitteln und einem nicht-färbenden Verschnitt bestehen. Jedes der Farbmittel enthält ein oder mehrere Pigmente, welche beispielsweise in einem Lösungsmittel dispergiert sind, wohingegen der nicht-färbende Verschnitt ein oder mehrere Bindemittel, wie Alkydharz, und/oder ein oder mehrere Lösungsmittel, wie beispielsweise Mineralöl oder Pflanzenöl, enthalten kann. Im Falle einer Offsetdruckfarbe wird der Verschnitt auch als Firnis bezeichnet. Der Farbenhersteller mischt diese Bestandteile zu der Farbrezeptur zusammen. Ein Problem dabei ist jedoch, dass es für den Farbenhersteller sehr aufwendig ist, eine zuverlässige Qualitätskontrolle der hergestellten Farbrezeptur durchzuführen, da es hierzu notwendig ist, die Farbrezeptur mit dem vorgegebenen Applikationsverfahren auf das vorgegebene Substrat aufzubringen, bevor dann der Farbton des so erhaltenen Farbprodukts mit dem vorgegebenen Zielfarbton verglichen wird. In der Regel stehen dem Farbenhersteller jedoch nur Laborapplikationsverfahren zur Verfügung und oft ist für ihn auch das Kundensubstrat nicht verfügbar. Wenn die Abweichung zwischen dem vorgegebenen Zielfarbton und dem für die Produktionscharge erhaltenen Farbton zu groß ist, muss der Farbenhersteller die Produktionscharge korrigieren, indem entsprechende Mengen von einem oder mehreren der Halbfertigprodukte nachträglich zugegeben werden.

US 2006/012810 A1 offenbart ein System und ein Verfahren zum elektronischen Herstellen von farbigen Materialien und zum Bestimmen von Farbtintenformeln, um Tinte zu erzeugen, die eine bestimmte Farbe auf zwei oder mehr Substraten oder Materialien hat.

Ausgehend davon lag der vorliegenden Erfindung die Aufgabe zugrunde, eine Datenverarbeitungsvorrichtung zum Ermitteln einer Farbrezeptur und zur Qualitätskontrolle der hergestellten Farbrezeptur bereitzustellen, welche nach der Applikation mit einem vorgegebenen Applikationsverfahren auf ein vorgegebenes Substrat ein Farbprodukt mit einem vorgegebenen Farbton ergibt.

Erfindungsgemäß wird diese Aufgabe gelöst durch eine Datenverarbeitungsvorrichtung wie in den beigefügten Ansprüchen dargelegt. Indem zumindest einer der Datensätze, bevorzugt eine Vielzahl der Datensätze und besonders bevorzugt alle Datensätze auch Informationen über wenigstens einen Referenzfarbton, ein Referenzapplikationsverfahren sowie ein Referenzsubstrat umfassen, wobei sich der Referenzfarbton ergibt, wenn die Farbrezeptur, über die in dem Datensatz Informationen enthalten sind, mit dem Referenzapplikationsverfahren auf das Referenzsubstrat appliziert wird, wobei das Referenzapplikationsverfahren von dem Applikationsverfahren, über das in dem Datensatz Informationen enthalten sind, und/oder das Referenzsubstrat von dem Substrat, über das in dem Datensatz Informationen enthalten sind, verschieden ist, kann eine hergestellte Charge der Farbrezeptur einfach einer zuverlässigen Qualitätskontrolle unterzogen werden. Es muss nämlich nur eine entsprechende Menge der hergestellten Charge der Farbrezeptur mit dem Referenzapplikationsverfahren auf das Referenzsubstrat aufgebracht werden und dann der Farbton des so hergestellten Referenzfarbprodukts mit dem Referenzfarbton, über den in dem Datensatz Informationen enthalten sind, verglichen werden. Wenn die bei diesem Vergleich erhaltene Abweichung in einem vorgegebenen Toleranzbereich liegt, kann die Charge freigegeben werden. Andernfalls muss diese so lange durch Zugabe einer oder mehrerer Bestandteile korrigiert werden, bis für ein damit hergestelltes Referenzfarbprodukt ein im Toleranzbereich liegender Farbton erhalten wird.

Ein besonderer Vorteil der erfindungsgemäßen Datenverarbeitungsvorrichtung liegt darin, dass es die Qualitätskontrolle nicht erfordert, dass der Farbenhersteller die hergestellte Farbrezeptur mit dem von dem Kunden vorgegebenen (in der Regel eine komplexe Anlage erfordernden) Zielapplikationsverfahren auf das von dem Kunden vorgegebene (unter Umständen sehr spezielle und kommerziell schlecht verfügbare) Zielsubstrat aufbringt, sondern er lediglich ein Referenzsubstrat, welches beispielsweise ein auf der ganzen Welt verfügbares und gängiges Normpapier ist, mit einem (vorzugsweise einfachen und keine komplexe Anlage erfordernden) Referenzapplikationsverfahren aufbringen muss. Andernfalls müsste der Farbenhersteller für jede einzelne Farbrezeptur das entsprechende von dem Kunden vorgegebene Zielsubstrat, welches an seinem Standort möglicherweise gar nicht oder nur sehr schwer erhältlich ist, beschaffen und das spezielle von dem Kunden vorgegebene Zielapplikationsverfahren verwenden. Der Farbenhersteller, der eine Vielzahl verschiedenster Farbrezepturen herstellt, bräuchte in diesem Fall ein enorm großes Lager mit einer Vielzahl verschiedenster, unter Umständen schwer erhältlicher Zielsubstrate sowie eine Vielzahl von verschiedensten Applikationsanlagen, wie beispielsweise eine Rollenoffsetdruckmaschine, eine Tiefdruckmaschine und dergleichen. Erfindungsgemäß reicht hingegen unter Umständen ein Referenzsubstrat und ein Referenzapplikationsverfahren aus, wenn für alle in der Datenbank verfügbaren Farbrezepturen dasselbe Referenzsubstrat und Referenzapplikationsverfahren gespeichert sind. Für unterschiedliche Farben, speziell unterschiedliche Druckfarben empfiehlt es sich jedoch, beispielsweise unterschiedliche Referenzapplikationsverfahren für flüssige und pastöse Farben zu wählen. Diese Referenzapplikationsverfahren können beispielsweise ein Laborandruckgerät für Offsetfarben (z.B. Prüfbau Mehrzweck-Probedruckmaschine MZ II oder MZE, IGT Testandruckgeräte für Offsetfarben, oder der Mickle Ink Proofer), ein anderes Laborandruckgerät für flüssige Druckfarben, wie beispielsweise ein Labratester 180 (nsm Norbert Schläfli AG), ein Flach-Rund-Andruckgerät mit gravierter oder geätzter Platte, Pamarco Proofer, QD Proofing System von Harper Scientific, oder auch ein Rakelauftraggerät (z.B. Erichsen Rakelauftraggerät K Control Coater 623) sein. Wenn beispielsweise das Referenzapplikationsverfahren ein Offsetdruckverfahren ist, das Referenzsubstrat ein gängiges Normpapier ist und die Informationen über den Referenzfarbton eine Referenzspektralkurve für den Wellenlängenbereich von 400 bis 700 nm ist, muss der Farbenhersteller für die Qualitätskontrolle lediglich eine entsprechende Menge seiner Produktionscharge auf das Normpapier drucken, von der Oberfläche des so erhaltenen Farbprodukts (also des mit der Farbrezeptur versehenen Normpapiers) mit einem Spektralphotometer eine Spektralkurve für den Wellenlängenbereich von 400 bis 700 nm aufnehmen und die so erhaltene Spektralkurve mit der Referenzspektralkurve vergleichen. Sofern beide Spektralkurven maximal um einen innerhalb eines vorgegebenen Toleranzbereichs liegenden Faktor voneinander abweichen, kann die Produktionscharge freigegeben werden. Die Verwendung von Normpapier hat ferner den Vorteil, dass es weniger stark altert und beständiger ist als herkömmliches Papier.

Unter Normpapier wird im Sinne der vorliegenden Erfindung ein Papier verstanden, welches in einem nationalen oder internationalen Standard normiert ist. Beispiele für geeignete Normpapiere sind in der Norm DIN ISO 2846-1: 2017 spezifizierte Papiere. Werden beispielsweise Flüssigfarben auf transparenter Folie appliziert, so kann vor der Aufnahme der Spektralkurve ein Normpapier unterlegt werden, um so ebenfalls standardisierte Bedingungen für die Aufnahme der Spektralkurve zu gewährleisten.

Unter zwei oder mehr gleichen Farbtönen wird im Sinne der vorliegenden Erfindung verstanden, dass die zwei oder mehr Farbtöne unter dem demselben Licht betrachtet, vorzugsweise unter demselben Normlicht gemäß ISO 3664, oder beispielsweise unter den Messbedingungen M0, M1, M2 oder M3 gemessen, mit dem menschlichen Auge nicht unterscheidbar sind und insbesondere voneinander um nicht mehr als einen ΔE₀₀-Wert von 0,5 und bevorzugt um nicht mehr als einen ΔE₀₀-Wert von 0,2 abweichen. Des Weiteren ist es bevorzugt unter zwei oder mehr gleichen Farbtönen zu verstehen, dass die zwei oder mehr Farbtöne voneinander um einen dH* von maximal 0,5, besonders bevorzugt einen dH* von maximal 0,2 abweichen. Die Parameter ΔE und dH* sind in der DIN EN ISO 11664-6:2014 definiert.

Erfindungsgemäß unterscheidet sich das Referenzapplikationsverfahren von dem Applikationsverfahren, über das in dem Datensatz Informationen enthalten sind, und/oder das Referenzsubstrat von dem Substrat, über das in dem Datensatz Informationen enthalten sind. Dies umfasst drei Alternativen, nämlich: Erstens, dass das Referenzapplikationsverfahren von dem Applikationsverfahren, über das in dem Datensatz Informationen enthalten sind, verschieden ist, dass aber das Referenzsubstrat gleich dem Substrat ist. Zweitens, dass das Referenzsubstrat von dem Substrat, über das in dem Datensatz Informationen enthalten sind, verschieden ist, dass aber das Referenzapplikationsverfahren gleich dem Applikationsverfahren ist. Drittens, dass das Referenzapplikationsverfahren von dem Applikationsverfahren, über das in dem Datensatz Informationen enthalten sind, verschieden ist, und, dass das Referenzsubstrat von dem Substrat, über das in dem Datensatz Informationen enthalten sind, verschieden ist.

Um die Vorteile der vorliegenden Erfindung gut zu nutzen, wird es in Weiterbildung des Erfindungsgedankens vorgeschlagen, dass wenigstens 50%, besonders bevorzugt wenigstens 80%, weiter bevorzugt wenigstens 90%, ganz besonders bevorzugt wenigstens 95% und höchst bevorzugt alle der Datensätze Informationen über wenigstens einen Referenzfarbton sowie das dazu gehörige Referenzapplikationsverfahren und das dazu gehörige Referenzsubstrat umfassen.

Bezüglich der Anzahl der pro Datensatz enthaltenen Referenzfarbtöne ist die vorliegende Erfindung nicht besonders limitiert. Daher können einige der Datensätze jeweils Informationen über einen Referenzfarbton enthalten sowie das dazu gehörige Referenzapplikationsverfahren und das dazu gehörige Referenzsubstrat und andere Datensätze jeweils Informationen über zwei oder mehr verschiedene Referenzfarbtöne sowie die dazu gehörigen Referenzapplikationsverfahren und Referenzsubstrate enthalten, die jeweils mit einem anderen Applikationsverfahren und/oder auf einem anderen Substrat den gleichen Zielfarbton ergeben.

Gemäß einer ersten Variante dieser Ausführungsform umfasst der zumindest eine Datensatz der Datenbank Informationen über genau einen Referenzfarbton sowie das dazu gehörige Referenzapplikationsverfahren und das dazu gehörige Referenzsubstrat. Vorzugsweise umfassen wenigstens 50%, besonders bevorzugt wenigstens 80%, weiter bevorzugt wenigstens 90%, ganz besonders bevorzugt wenigstens 95% und höchst bevorzugt alle der Datensätze Informationen über genau einen Referenzfarbton sowie das dazu gehörige Referenzapplikationsverfahren und das dazu gehörige Referenzsubstrat.

Gemäß einer zweiten Variante dieser Ausführungsform umfasst der zumindest eine Datensatz der Datenbank Informationen über zwei verschiedene Referenzfarbtöne sowie die jeweils dazu gehörigen Referenzapplikationsverfahren und Referenzsubstrate, wobei sich der erste Referenzfarbton ergibt, wenn die Farbrezeptur, über die in dem Datensatz Informationen enthalten sind, mit einem ersten Referenzapplikationsverfahren auf ein erstes Referenzsubstrat appliziert wird, und sich der zweite Referenzfarbton ergibt, wenn die Farbrezeptur, über die in dem Datensatz Informationen enthalten sind, mit einem zweiten Referenzapplikationsverfahren auf ein zweites Referenzsubstrat appliziert wird, wobei sich das erste Referenzapplikationsverfahren von dem zweiten Referenzapplikationsverfahren und/oder das erste Referenzsubstrat von dem zweiten Referenzsubstrat unterscheidet. Vorzugsweise umfassen wenigstens 50%, besonders bevorzugt wenigstens 80%, weiter bevorzugt wenigstens 90%, ganz besonders bevorzugt wenigstens 95% und höchst bevorzugt alle der Datensätze Informationen über zwei verschiedene Referenzfarbtöne sowie die jeweils dazu gehörigen Referenzapplikationsverfahren und Referenzsubstrate.

Gemäß einer dritten Variante dieser Ausführungsform umfasst der zumindest eine Datensatz der Datenbank Informationen über mehr als zwei verschiedene Referenzfarbtöne. Vorzugsweise umfassen wenigstens 50%, besonders bevorzugt wenigstens 80%, weiter bevorzugt wenigstens 90%, ganz besonders bevorzugt wenigstens 95% und höchst bevorzugt alle der Datensätze Informationen über mehr als zwei verschiedene Referenzfarbtöne.

Gemäß einer vierten Variante dieser Ausführungsform umfasst ein Teil der Datensätze der Datenbank Informationen über genau einen Referenzfarbton, wohingegen der andere Teil der Datensätze Informationen über zwei oder mehr Referenzfarbtöne enthält.

Unter in den Datensätzen gespeicherten Informationen über den wenigstens einen Referenzfarbton werden im Sinne der vorliegenden Erfindung alle Arten von Informationen verstanden, die den Referenzfarbton eindeutig charakterisieren.

Gemäß einer besonders bevorzugten Ausführungsform der vorliegenden Erfindung handelt es sich bei den Informationen über den Referenzfarbton um die Daten einer Spektralkurve, die erhalten worden ist, indem die in dem jeweiligen Datensatz gespeicherte Farbrezeptur mit dem Referenzapplikationsverfahren auf das Referenzsubstrat appliziert worden ist und dann von der Oberfläche des so erhaltenen Farbprodukts mit einem Spektrophotometer über einen Wellenlängenbereich von 400 bis 700 nm aufgenommene spektrale Reflexionskurve. Dabei kann die spektrale Reflexionskurve so aufgenommen werden, dass die Gesamtreflexion, die Totalreflexion, die diffuse Reflexion oder die gerichtete Reflexion gemessen wird. Vorzugsweise wird das Lichtspektrum in einem ersten Winkel auf das zu vermessende Farbprodukt aufgestrahlt und die Reflexion mit einem Sensor unter einem zweiten Winkel gemessen. Beispielsweise kann die Lichtquelle das Lichtspektrum in einem Winkel von 45° auf das Farbprodukt einstrahlen und der Sensor die Reflexion bei 0° messen, wobei beide Winkel in Bezug auf die Vertikale, d.h. die zu der Farbproduktoberfläche senkrechte Ebene, gemeint sind, also 0° der Vertikalen entspricht. Alternativ dazu kann die Lichtquelle das Lichtspektrum in einem Winkel von 0° auf das Farbprodukt einstrahlen und der Sensor die Reflexion bei 45° messen oder kann die Lichtquelle das Lichtspektrum diffus auf das Farbprodukt einstrahlen und der Sensor die Reflexion bei 0°, 8° oder irgendeinem anderen Winkel messen. Die Daten der Spektralkurve können bei dieser Ausführungsform der vorliegenden Erfindung die Reflexionswerte für jeden Nanometer in dem gemessenen Wellenlängenbereich sein, die Reflexionswerte für jeden fünften Nanometer in dem gemessenen Wellenlängenbereich sein, die Reflexionswerte für jeden zehnten Nanometer in dem gemessenen Wellenlängenbereich sein oder die Reflexionswerte in anderen Abständen.

Gemäß einer dazu alternativen Ausführungsform der vorliegenden Erfindung kann es sich bei den Informationen über den Referenzfarbton auch um die Werte in einem Farbraum handeln, welche dem Referenzfarbton entsprechen. Vorzugsweise sind die Informationen über den Referenzfarbton gemäß dieser Ausführungsform die Lab-Werte des Referenzfarbtons. Alternativ dazu können auch die Werte aus anderen Farbräumen verwendet werden, wie LUV-Werte, RGB-Werte, LCh-Werte, XYZ-Werte oder dergleichen.

Die vorstehenden Ausführungen zu dem Referenzfarbton und den hierzu in den Datensätzen der Datenbank gespeicherten Informationen gelten für jeden der in den Datensätzen gespeicherten Farbtöne sowie für den in dem Schritt b) der erfindungsgemäßen Datenverarbeitungsvorrichtung einzugebenden Zielfarbton gleichermaßen. Mithin kann es sich bei den in den in den Datensätzen enthaltenen Informationen zu dem Farbton bzw. bei dem in dem Schritt b) von dem Benutzer vorzugebenden Zielfarbton jeweils um die Daten einer über einen Wellenlängenbereich von 400 bis 700 nm aufgenommenen Spektralkurve, wie insbesondere einer spektralen Reflexionskurve, um die Lab-Werte des Farbtons oder dergleichen handeln.

Zusätzlich zu den Informationen über den wenigstens einen Referenzfarbton enthalten die entsprechenden Datensätzen Informationen zu dem Referenzapplikationsverfahren und zu dem Referenzsubstrat, woraus sich durch Applizieren der Farbrezeptur, über welche in diesen Datensätzen Informationen enthalten sind, mit dem Referenzapplikationsverfahren auf das Referenzsubstrat der Referenzfarbton ergibt. Während die Informationen zu dem Referenzapplikationsverfahren die Angabe des Referenzapplikationsverfahrens, wie beispielsweise Rollenoffsetdruck, die Angabe eines das Referenzapplikationsverfahren identifizierenden Zahlen- und/oder Buchstabencodes oder Textes oder dergleichen umfassen, handelt es sich bei den Informationen zu dem Referenzsubstrat beispielsweise um die Angabe des Referenzsubstrats, wie beispielsweise ein spezielles Normpapier, um die Angabe eines das Referenzsubstrat identifizierenden Zahlen- und/oder Buchstabencodes oder Textes oder um die Daten einer über einen Wellenlängenbereich von 400 bis 700 nm aufgenommenen Spektralkurve, wie insbesondere einer spektralen Reflexionskurve, oder um die Lab-Werte des Referenzsubstrats oder dergleichen. Bezüglich der Art des Referenzapplikationsverfahrens, über das in den Datensätzen der Datenbank Informationen enthalten sind, ist die vorliegende Erfindung nicht beschränkt. Mithin kann es sich bei dem Referenzapplikationsverfahren um jedes Applikationsverfahren handeln, mit dem eine Farbrezeptur auf ein Substrat aufgebracht werden kann. Beispielsweise kann es sich bei dem Referenzapplikationsverfahren, über das in den Datensätzen der Datenbank Informationen enthalten sind, um ein Applikationsverfahren handeln, welches aus der aus Druckverfahren, Lederfärbeprozessen, Textilfärbeprozessen, Streichen, Rollen, Spritzen, Tauchen, Walzen, Fluten, Glasieren, Pulverbeschichten, Emaillieren und beliebigen Kombinationen von zwei oder mehr der vorstehenden Verfahren bestehenden Gruppe ausgewählt ist. Vorzugsweise handelt es sich bei dem Referenzapplikationsverfahren, über das in den Datensätzen der Datenbank Informationen enthalten sind, um eines, welches aus der ausgewählt ist, welche aus Flachdruck, Tiefdruck, Flexodruck, Digitaldruck, Siebdruck, Hochdruck, Tampondruck, Transferdruck, Sublimationsdruck, Lichtdruck, Lederfärbeprozessen, Textilfärbeprozessen und beliebigen Kombinationen von zwei oder mehr der vorstehenden Verfahren besteht. Beispiele für Flachdruck sind Bogenoffsetdruck, Rollenoffsetdruck, Steindruck, Lithografiedruck, wohingegen Beispiele für Digitaldruck Xerografie und Inkjet sind. Die vorstehenden Ausführungen zu dem Referenzapplikationsverfahren und den hierzu in den Datensätzen der Datenbank gespeicherten Informationen gelten für die in den Datensätzen für den Farbton gespeicherten Applikationsverfahren sowie für das in dem Schritt b) der erfindungsgemäßen Datenverarbeitungsvorrichtung einzugebende Zielapplikationsverfahren gleichermaßen. Mithin kann es sich bei den in den Datensätzen enthaltenen Informationen zu dem Applikationsverfahren bzw. bei dem in dem Schritt b) von dem Benutzer vorzugebenden Zielapplikationsverfahren jeweils um die Angabe des Applikationsverfahrens, die Angabe eines das Applikationsverfahren identifizierenden Zahlen- und/oder Nummerncodes oder dergleichen handeln, wobei das Applikationsverfahren bzw. das Zielapplikationsverfahren aus derselben, vorstehend erläuterten Gruppe von Verfahren ausgewählt sein kann.

Auch bezüglich der Art des Referenzsubstrates, über das in den Datensätzen der Datenbank Informationen enthalten sind, ist die vorliegende Erfindung nicht besonders limitiert. Mithin kann es sich bei dem Referenzsubstrat um jedes Substrat handeln, auf das mit einem Applikationsverfahren eine Farbrezeptur aufgebracht werden kann. Beispielsweise kann es sich bei dem Referenzsubstrat um ein Substrat handeln welches aus der aus Papier, Karton, Pappe, Kunststofffolie, Leder, Textil, Metall, Holz, Glas, Keramik, Haut, metallisierten Oberflächen, Beton, Kunststoffkörpern, Laminaten, Verbundwerkstoffen und beliebigen Kombinationen von zwei oder mehr der vorstehenden Substrate bestehenden Gruppe ausgewählt ist. Vorzugsweise ist das Referenzsubstrat aus der Gruppe ausgewählt, welche aus Zeitungsdruckpapier, ungestrichenem Papier, gestrichenem Papier, Karton, Pappe, Wellpappe, Kunststofffolie (beispielsweise aus PE Polyethylen, OPP Polypropylen, OPA Polyamid, PVC Polyvinylchlorid, PET Polyethylenterephthalat, PLA Polylactid-Folie), Filzen, Vliesstoffen, Laminaten aus Kunststoff- und Aluminiumfolie, Leder, Textil und beliebigen Kombinationen von zwei oder mehr der vorstehenden Substrate besteht.

Die vorstehenden Ausführungen zu dem Referenzsubstrat und den hierzu in den Datensätzen der Datenbank gespeicherten Informationen gelten für die in den Datensätzen für den Farbton gespeicherten Substrate sowie für das in dem Schritt b) des erfindungsgemäßen Verfahrens einzugebende Zielsubstrat gleichermaßen. Mithin kann es sich bei den in den Datensätzen enthaltenen Informationen zu dem Substrat bzw. bei dem in dem Schritt b) von dem Benutzer vorzugebenden Zielsubstrat jeweils um die Angabe des Substrats, wie beispielsweise ein spezielles Normpapier, um die Angabe eines das Substrat identifizierenden Zahlen- und/oder Buchstabencodes oder Textes, um die Daten einer über einen Wellenlängenbereich von 400 bis 700 nm aufgenommenen Spektralkurve, wie insbesondere einer spektralen Reflexionskurve, um die Lab-Werte des Substrats oder dergleichen handeln, wobei das Substrat bzw. das Zielsubstrat aus derselben, vorstehend erläuterten Gruppe von Substraten ausgewählt sein kann. Alternativ dazu oder zusätzlich dazu kann für das Substrat beispielsweise auch dessen Bezeichnung oder Handelsname eingegeben oder die Spektralkurve eingemessen oder eingelesen werden. Vorzugsweise handelt es sich bei den in den Datensätzen der Datenbank gespeicherten Informationen über die jeweiligen Substrate um Daten einer Spektralkurve, die erhalten worden ist, indem von dem jeweiligen Substrat mit einem Spektrophotometer über einen Wellenlängenbereich von 400 bis 700 nm eine Spektralkurve aufgenommen worden ist. Besonders bevorzugt handelt es sich dabei um eine über einen Wellenlängenbereich von 400 bis 700 nm aufgenommene spektrale Reflexionskurve, wobei für diese die Gesamtreflexion, die Totalreflexion, die diffuse Reflexion oder die gerichtete Reflexion gemessen sein kann. Die Messung kann dabei beispielsweise bei einem Einstrahlwinkel/Sensormesswinkel von 45°/0°, bei 0°/45°, bei diffuser Einstrahlung/0°, bei diffuser Einstrahlung/8° oder bei anderen Winkel erfolgen. Die Daten der Spektralkurve können bei dieser Ausführungsform der vorliegenden Erfindung die Reflexionswerte für jeden Nanometer zwischen 400 und 700 nm sein, die Reflexionswerte für jeden fünften Nanometer zwischen 400 und 700 nm sein, die Reflexionswerte für jeden zehnten Nanometer zwischen 400 und 700 nm sein oder die Reflexionswerte in anderen Abständen.

Unter in den Datensätzen gespeicherten Informationen über die Farbrezeptur werden im Sinne der vorliegenden Erfindung alle Arten von Informationen verstanden, welche die Farbrezeptur eindeutig charakterisieren. Beispielsweise können diese Informationen die Angabe aller in der Farbrezeptur enthaltenen Einzelkomponenten bzw. Rohstoffe sowie deren Mengen umfassen. Allerdings ist es auch möglich, die Farbrezeptur als Mischung aus Halbfertigprodukten anzugeben, wie einer Mischung aus einem oder mehreren Verschnitten und einem oder mehreren Farbmitteln. Ferner ist es auch möglich, die Farbrezeptur als Mischung aus Fertigprodukten anzugeben, wie einer Mischung aus zwei oder mehr Farben. In diesen Fällen umfassen die Informationen die Angabe aller in der Farbrezeptur enthaltenen Halbfertigprodukte sowie deren Mengen bzw. die Angabe aller in der Farbrezeptur enthaltenen Fertigprodukte sowie deren Mengen. Zudem ist es auch möglich, die Farbrezeptur als Mischung aus Einzelkomponenten bzw. Rohstoffen und Halbfertigprodukten, als Mischung aus Einzelkomponenten bzw. Rohstoffen und Fertigprodukten, als Mischung aus Halbfertigprodukten und Fertigprodukten oder als Mischung aus Einzelkomponenten bzw. Rohstoffen, Halbfertigprodukten und Fertigprodukten anzugeben. Schließlich ist es auch möglich, die Farbrezeptur anhand eines Handelsnamens, oder eines Codes aus Buchstaben- und/oder Zahlenkombinationen zu spezifizieren.

Gemäß einer besonders bevorzugten Ausführungsform der vorliegenden Erfindung ist es vorgesehen, dass wenigstens eine, bevorzugt wenigstens 10%, besonders bevorzugt wenigstens 50%, weiter bevorzugt wenigstens 80%, ganz besonders bevorzugt wenigstens 90% und höchst bevorzugt alle der Farbrezepturen, über die in den Datensätzen der Datenbank Informationen enthalten sind, aus Halbfertigprodukten, nämlich bevorzugt aus wenigstens einem Farbmittel und wenigstens einem nicht-färbenden Verschnitt zusammengesetzt sind. Besonders bevorzugt sind diese aus zwei bis fünfzehn und besonders bevorzugt aus zwei bis zehn Halbfertigprodukten zusammengesetzt.

Beispielsweise ist es bevorzugt, dass diese aus zwei bis vier Farbmitteln und einem nicht-färbenden Verschnitt zusammengesetzt sind. Beispielsweise können zu diesen färbenden und nichtfärbenden Komponenten weitere Halbfertigprodukte, wie Lösemittel oder Lösemittelgemische, Additive, wie z.B. Slip-, Wachsadditive oder Entschäumer, Haftvermittler, Photoinitiatoren, Stabilisatoren, Trockenstoffe, Härter oder ähnliches hinzukommen. Die in den Datensätzen gespeicherten Informationen über die Farbrezeptur umfassen bei dieser Ausführungsform die Angabe aller in der Farbrezeptur enthaltenen Halbfertigprodukte sowie deren Mengen. Dabei kann der nicht-färbende Verschnitt wenigstens eine Komponente enthalten, welche aus der Gruppe ausgewählt ist, welche aus Bindemitteln, Lösungsmitteln, Wachsen, Additiven, Reaktivverdünnern, Fotoinitiatoren, Härtern und beliebigen Kombinationen von zwei oder mehr dieser Verbindungen besteht. Bei dem wenigstens einen Farbmittel handelt es sich bevorzugt um eine Pigmentformulierung in fester, flüssiger oder pastöser Form oder um eine einen oder mehrere Farbstoffe enthaltende Formulierung, in der ein Pigment oder eine Mischung aus zwei oder mehr Pigmenten in Lösungsmittel, Bindemittel oder einer Mischung aus Lösungsmittel und Bindemittel dispergiert ist. Das Farbmittel kann beispielsweise wenigstens ein Effektpigment enthalten, welches bevorzugt aus der Gruppe ausgewählt ist, die aus Metalleffektpigmenten, Perlglanzpigmenten, mit Metalloxid beschichtetem Glimmer, Interferenzpigmenten, Lumineszenzpigmenten, UV-absorbierenden Pigmenten, IR-absorbierenden Pigmenten, photochromen Pigmenten, thermochromen Pigmenten, piezo-elektronischen Pigmenten, magnetischen Pigmenten und beliebigen Kombinationen von zwei oder mehr der vorstehenden Pigmenttypen besteht. Alternativ dazu können oder auch zusätzlich dazu können auch Nichteffektpigmente, wie Buntpigmente, Weißpigmente, Schwarzpigmente und/oder Farbstoffe eingesetzt werden. Vorzugsweise enthält das wenigstens eine Farbmittel zusätzlich ein oder mehrere aus der aus Additiven, Reaktivverdünner, Fotoinitiatoren, Härtern und beliebigen Kombinationen von zwei oder mehr der vorstehenden Verbindungen bestehenden Gruppe ausgewählte Verbindungen. Beispielsweise kann das wenigstens eine Farbmittel als Additiv ein Dispergiermittel enthalten.

Gemäß einer dazu alternativen Ausführungsform der vorliegenden Erfindung ist es vorgesehen, dass wenigstens eine, bevorzugt wenigstens 10%, besonders bevorzugt wenigstens 50%, weiter bevorzugt wenigstens 80%, ganz besonders bevorzugt wenigstens 90% und höchst bevorzugt alle der Farbrezepturen, über die in den Datensätzen der Datenbank Informationen enthalten sind, aus Fertigprodukten, nämlich bevorzugt aus zwei bis fünfzehn Farben und besonders bevorzugt aus zwei bis zehn Farben zusammengesetzt sind. Diese können als Farbmittel wenigstens ein Effektpigment enthalten, welches bevorzugt aus der Gruppe ausgewählt ist, die aus Metalleffektpigmenten, Perlglanzpigmenten, mit Metalloxid beschichtetem Glimmer, Interferenzpigmenten, Lumineszenzpigmenten, UV-absorbierenden Pigmenten, IR-absorbierenden Pigmenten, photochromen Pigmenten, thermochromen Pigmenten, piezo-elektronischen Pigmenten, magnetischen Pigmenten und beliebigen Kombinationen von zwei oder mehr der vorstehenden Pigmenttypen besteht. Alternativ dazu können oder auch zusätzlich dazu können auch Nichteffektpigmente und/oder Farbstoffe eingesetzt werden.

Gemäß einer weiteren, dazu alternativen Ausführungsform der vorliegenden Erfindung ist es vorgesehen, dass ein Teil der Farbrezepturen, über die in den Datensätzen der Datenbank Informationen enthalten sind, aus Fertigprodukten, nämlich bevorzugt aus zwei bis fünf Farben sowie ggf. einer zusätzlich farbneutralen Komponente, wie Verschnitt, zusammengesetzt sind, wohingegen der andere Teil der Farbrezepturen aus Halbfertigprodukten, nämlich bevorzugt aus zwei bis zehn Halbfertigprodukten zusammengesetzt ist.

In Bezug auf die Art der Farbrezepturen, über die in den Datensätzen der Datenbank Informationen enthalten sind, ist die vorliegende Erfindung nicht limitiert. Vorzugsweise sind wenigstens eine, bevorzugt wenigstens 10%, besonders bevorzugt wenigstens 50%, weiter bevorzugt wenigstens 80%, ganz besonders bevorzugt wenigstens 90% und höchst bevorzugt alle Farbrezepturen, über die in den Datensätzen der Datenbank Informationen enthalten sind, aus der Gruppe ausgewählt, welche aus Druckfarben, Farblacken, Pulverlacken, Lederfarben und Textilfarben besteht.

Vorzugsweise erfolgt das Vorgeben in dem Schritt b) durch Eingaben des Benutzers in das Computerprogramm. Um das Vorgeben in dem Schritt b) durch Eingaben des Benutzers in das Computerprogramm zu ermöglichen, wird es in Weiterbildung des Erfindungsgedankens vorgeschlagen, dass das Computerprogramm anklickbare Vorauswahlen der einzugebenden Parameter, nämlich Zielapplikationsverfahren, Zielsubstrat und Zielfarbton, enthält. Alternativ dazu kann das Vorgeben auch durch Übertragung von Daten erfolgen, indem beispielsweise entsprechende Daten aus einer auf einem Datenträger oder in einem Computer gespeicherten Datei in das Computerprogramm übertragen werden.

Um das Vorgeben des Zielapplikationsverfahrens in dem Schritt b) zu ermöglichen, ist es bevorzugt, dass das Computerprogramm anklickbare Vorauswahlen von Applikationsverfahren enthält, aus denen der Benutzer in dem Schritt b) das Zielapplikationsverfahren durch Anklicken vorgeben kann. Alternativ dazu, kann das Computerprogramm so programmiert sein, dass es die Eingabe des Zielapplikationsverfahren als Text oder als das Zielapplikationsverfahren identifizierenden Zahlen- und/oder Textcodes ermöglicht.

In Weiterbildung des Erfindungsgedankens wird es vorgeschlagen, dass das Computerprogramm so ausgestaltet ist, dass der Benutzer in dem Schritt b) das Zielsubstrat auf mindestens eine und bevorzugt alle der folgenden Weisen vorgeben kann:
i) Übertragen der Daten einer mit einem Spektrophotometer zwischen 180 und 4000 nm und bevorzugt zwischen 400 und 700 nm aufgenommenen Spektralkurve, bevorzugt einer spektralen Reflexionskurve und besonders bevorzugt einer wie weiter vorstehend erläutert gemessenen spektralen Reflexionskurve des Zielsubstrats in das Computerprogramm, beispielsweise direkt (d.h. ohne zwischengeschalteten Datenträger), von einer DVD, einem USB-Stick oder dergleichen,
ii) Anklicken des Zielsubstrats aus einer in dem Computerprogramm gespeicherten Sammlung von Vorauswahlen für verschiedene Substrate,
iii) Eingeben der Werte einer Spektralkurve, bevorzugt einer spektralen Reflexionskurve und besonders bevorzugt einer wie weiter vorstehend erläutert gemessenen spektralen Reflexionskurve des Zielsubstrats in das Computerprogramm, beispielsweise indem die Reflexionswerte für die Wellenlängen zwischen 400 und 700 nm in 1 nm-Abständen, in 5 nm-Abständen, in 10 nm-Abständen oder in anderen Abständen als Zahlen eingegeben werden,
iv) Eingeben oder Übertragen der Lab-Werte des Zielsubstrats oder von Werten eines anderen Farbraumes, wie LUV-Werte, RGB-Werte, LCh-Werte, XYZ-Werte oder dergleichen in das Computerprogramm.

Gleichermaßen ist es bevorzugt, dass das Computerprogramm so ausgestaltet ist, dass der Benutzer in dem Schritt b) den Zielfarbton auf mindestens eine und bevorzugt alle der folgenden Weisen vorgeben kann:
i) Übertragen der Daten einer mit einem Spektrophotometer zwischen 400 und 700 nm aufgenommenen Spektralkurve, bevorzugt einer spektralen Reflexionskurve und besonders bevorzugt einer wie weiter vorstehend erläutert gemessenen spektralen Reflexionskurve des Zielfarbtons in das Computerprogramm, beispielsweise direkt (d.h. ohne zwischengeschalteten Datenträger), von einer DVD, einem USB-Stick oder dergleichen,
ii) Anklicken des Zielfarbtons aus einer in dem Computerprogramm gespeicherten Sammlung von Vorauswahlen für verschiedene Farbtöne,
iii) Eingeben oder Einlesen der Werte einer Spektralkurve, bevorzugt einer spektralen Reflexionskurve und besonders bevorzugt einer wie weiter vorstehend erläutert gemessenen spektralen Reflexionskurve des Zielfarbtons in das Computerprogramm, beispielsweise indem die Reflexionswerte für die Wellenlängen zwischen 400 und 700 nm in 1 nm-Abständen, in 5 nm-Abständen, in 10 nm-Abständen oder in anderen Abständen als Zahlen eingegeben werden,
iv) Eingeben, Einlesen oder Übertragen der Lab-Werte des Zielfarbtons oder von Werten eines anderen Farbraumes, wie LUV-Werte, RGB-Werte, LCh-Werte, XYZ-Werte oder dergleichen in das Computerprogramm.

Erfindungsgemäß wird in dem Schritt c) die Datenbank mit einem Computerprogramm durchsucht, ob diese mindestens einen Datensatz enthält, dessen Farbrezeptur, über die in dem Datensatz Informationen enthalten sind, nach der Applikation mit dem in dem Schritt b) vorgegebenen Zielapplikationsverfahren auf das in dem Schritt b) vorgegebene Zielsubstrat ein Farbprodukt mit einem Farbton ergibt, der dem in dem Schritt b) vorgegebenen Zielfarbton entspricht oder maximal mit einer vorgegebenen Toleranz von diesem abweicht. Dabei wird eine Toleranz eingeräumt, um dem Umstand Rechnung zu tragen, dass das menschliche Auge minimalste Unterschiede zwischen zwei nahezu identischen Farbtönen nicht wahrnehmen kann. Durch die Einrichtung einer Toleranz wird daher die Wahrscheinlichkeit eines Treffers in dem Schritt c) erhöht, ohne dass inakzeptable Abweichungen von dem vorgegebenen Zielfarbton hingenommen werden müssen.

Gemäß einer Ausführungsform der vorliegenden Erfindung ist in dem Computerprogramm eine Toleranz für den Schritt c) voreingestellt.

Alternativ dazu kann es vorgesehen sein, dass der Benutzer die Toleranz für den Schritt c) in das Computerprogramm eingeben kann. Das Computerprogramm kann hierzu so ausgestaltet werden, dass es eine stufenlose Einstellung der Toleranz, beispielsweise durch Eingabe eines Zahlenwertes, erlaubt. Ebenso ist es möglich, dass das Computerprogramm so ausgestaltet wird, dass der Benutzer die Toleranz gemäß in dem Computerprogramm vorgegebenen Voreinstellungen einstellen kann, beispielsweise indem der Benutzer eine von mehreren von dem Computerprogramm vorgegebenen Toleranzen anklickt und so auswählt. Ebenso ist es möglich, beide Ausführungsformen zu kombinieren, indem das Computerprogramm so ausgestaltet wird, dass der Benutzer entscheiden kann, ob er die Toleranz gemäß in dem Computerprogramm vorgegebenen Voreinstellungen oder beispielsweise durch Eingabe eines Zahlenwertes stufenlos einstellt.

In Weiterbildung des Erfindungsgedankens wird es vorgeschlagen, die maximale Toleranz so einzustellen, dass diese in dem Schritt c) einem Delta E-Wert von maximal 2, bevorzugt von maximal 1 und besonders bevorzugt von maximal 0,5 entspricht, und zwar unabhängig davon, ob diese Toleranz in dem Computerprogramm voreingestellt ist oder von dem Benutzer eingegeben wird. Als Delta E-Werte können alle gängigen Delta E-Werte eingesetzt werden, wie beispielsweise der ΔE*_{ab}, der ΔE94, der ΔE₀₀, der DIN99, der DIN99ₒ, der CMC, der Lübbe, der Lübbe korrigiert, der CIECAM02. Vorzugsweise wird der ΔE₀₀ eingesetzt. Grundsätzlich gilt, dass zwei verschiedene Farbtöne mit einer Abweichung des ΔE₀₀-Wertes von bis zu 1 einer sehr kleinen Farbtonabweichung entspricht, die nur von einem geschulten Auge erkennbar ist. Abweichungen in dem ΔE₀₀-Wert von bis zu 0,5 gelten als normalerweise nicht sichtbar und Abweichungen in dem ΔE₀₀-Wert von bis zu 0,2 sind auch von einem geschulten Auge nicht mehr erkennbar.

Gemäß einer weiteren bevorzugten Ausführungsform der vorliegenden Erfindung ist es vorgesehen, dass in dem Schritt d) nur die am besten den Zielfarbton ergebende Farbrezeptur angezeigt wird. Wenn in dem Schritt c) zwei oder mehr Datensätze gefunden werden, deren Farbrezepturen, über die in dem Datensatz Informationen enthalten sind, nach der Applikation mit dem in dem Schritt b) vorgegebenen Zielapplikationsverfahren auf das in dem Schritt b) vorgegebene Zielsubstrat Farbprodukte mit einem Farbton ergeben, der dem in dem Schritt b) vorgegebenen Zielfarbton entspricht oder maximal mit einer vorgegebenen Toleranz von diesem abweicht, wird daher gemäß dieser bevorzugten Ausführungsform nur derjenige Datensatz angezeigt wird, der ein Farbprodukt mit einem Farbton ergibt, der am wenigstens (also mit dem geringsten ΔE₀₀-Wert) von dem Zielfarbton abweicht.

Wie weiter vorstehend dargelegt, kann die Farbrezeptur prinzipiell als Rezept der Mengen aller einzelnen Rohstoffe angegeben werden. Da solche Farbrezepturen jedoch sehr komplex aufgebaut sind, bedeutet dies, dass die gesamte Farbe in einem insbesondere logistisch aufwendigen Produktionsprozess hergestellt werden muss, da zunächst alle Rohstoffe beschafft werden müssen. Daher ist es bevorzugt, dass die Farbrezeptur als Mischung aus Halbfertigprodukten, wie einer Mischung aus einem oder mehreren Verschnitten und einem oder mehreren Farbmitteln, oder als Mischung aus Fertigprodukten, wie einer Mischung aus mehreren Farben, gegebenenfalls zusätzlich mit Verschnitt, angegeben wird. Aus diesem Grund ist es bevorzugt, dass in dem Schritt d) die Zusammensetzung der Farbrezeptur i) als Mischung von Halbfertigprodukten, bevorzugt als Mischung von zwei bis fünfzehn Halbfertigprodukten und besonders bevorzugt als Mischung von zwei bis zehn Halbfertigprodukten angezeigt wird, oder ii) als Mischung von Fertigprodukten, bevorzugt als Mischung von zwei bis fünfzehn Fertigprodukten und besonders bevorzugt als Mischung von zwei bis zehn Fertigprodukten angezeigt wird.

Das Anzeigen der in dem mindestens einem Datensatz gespeicherten Informationen über die Farbrezeptur umfasst bei diesen Ausführungsformen mithin die Angabe der Mengen und der Bezeichnung der einzelnen Halbfertigprodukte bzw. Fertigprodukte, aus denen die Farbrezeptur zusammengesetzt ist.

In Weiterbildung des Erfindungsgedankens wird es vorgeschlagen, dass in dem Schritt d) auch der wenigstens eine Referenzfarbton des mindestens einen Datensatzes angezeigt wird. Der Benutzer kann diesen dann für die spätere Qualitätskontrolle einsetzen oder speichern, sofern er die Farbrezeptur herstellt, oder dem Dienstleister, den er die Farbrezeptur herstellen lässt, weitergeben.

Der wenigstens eine Referenzfarbton kann in jeder Form angegeben werden, welcher den Referenzfarbton eindeutig charakterisiert. Beispielsweis kann der wenigstens eine Referenzfarbton als Lab-Werte (oder Werte eines anderen Farbraumes, wie LUV-Werte, RGB-Werte, LCh-Werte, XYZ-Werte oder dergleichen), als Spektralkurve (insbesondere spektrale Reflexionskurve) zwischen 180 und 4000 nm und bevorzugt zwischen 180 und 4000 nm oder als Daten einer Spektralkurve (insbesondere spektrale Reflexionskurve) zwischen 180 und 4000 nm und bevorzugt zwischen 180 und 4000 nm angezeigt werden.

Die vorliegende Erfindung eignet sich insbesondere für die Verwendung von Datenbanken mit einer großen Anzahl von Datensätzen. Vorzugsweise umfasst die bei dem erfindungsgemäßen Verfahren verwendete Datenbank mehr als 10 Datensätze, weiter bevorzugt mehr als 100 Datensätze, noch weiter bevorzugt mehr als 1.000 Datensätze, insbesondere bevorzugt mehr als 10.000 Datensätze, besonders bevorzugt mehr als 100.000 Datensätze, ganz besonders bevorzugt mehr als 500.000 Datensätze und höchst bevorzugt eine Million Datensätze oder mehr.

Nach der Anzeige des in dem Schritt c) der erfindungsgemäßen Datenverarbeitungsvorrichtung gefundenen Treffers kann der Benutzer die gefundene Farbrezeptur herstellen oder von einem Dienstleister herstellen lassen. Insbesondere in dem Fall, dass die in dem Schritt c) gefundene Farbrezeptur nach den in der Datenbank enthaltenen Informationen nach der Applikation mit dem in dem Schritt b) vorgegebenen Zielapplikationsverfahren auf das in dem Schritt b) vorgegebene Zielsubstrat ein Farbprodukt mit einem Farbton ergibt, der von dem in dem Schritt b) vorgegebenen Zielfarbton innerhalb einer vorgegebenen Toleranz mit beispielsweise einem ΔE₀₀-Wert von 0,5 abweicht, ist es von Vorteil, wenn der Benutzer den sich ergebenden Farbton optisch anschauen kann, bevor er entscheidet, ob er diesen akzeptiert und die Farbe produziert oder produzieren lässt, oder nicht, und zwar, ohne zunächst die Farbrezeptur herstellen zu müssen. Um dies mit möglichst wenig Aufwand zu ermöglichen, ist es gemäß einer weiteren ganz besonders bevorzugten Ausführungsform der vorliegenden Erfindung vorgesehen, dass die Datenverarbeitungsvorrichtung einen Testalgorithmus umfasst, welcher einen Farbton simulieren kann, welcher nach dem Ausdrucken der Simulation mit einem Computer über einen Testpapierdrucker auf ein Testpapiersubstrat denselben Farbton ergibt, wie die Applikation der in dem Schritt c) gefundenen Farbrezeptur mit dem in dem Schritt b) vorgegebenen Zielapplikationsverfahren auf das in dem Schritt b) vorgegebene Zielsubstrat. Vorzugsweise ist das Computerprogramm bei dieser Ausführungsform so ausgestaltet, dass der Benutzer einen Testpapierdrucker sowie ein Testpapiersubstrat vorgeben kann, und zwar beispielsweise durch Anklicken eines entsprechenden Testpapierdruckers und Testpapiersubstrats in einer von dem Computerprogramm angezeigten Liste, oder durch Eingabe eines den Testpapierdrucker und das Testpapiersubstrat identifizierenden Zahlen- und/oder Nummerncodes oder dergleichen. Der Testpapierdrucker ist vorzugsweise ein handelsüblicher und weltweit kommerziell erhältlicher Papierdrucker, wie beispielsweise Tintenstrahldrucker oder Laserdrucker. Bei dem Testpapiersubstrat handelt es sich vorzugsweise um ein handelsübliches und weltweit kommerziell erhältliches Tintenstrahldruck- oder Laserdruckpapier. Diese Ausführungsform ermöglicht es dem Benutzer, einfach und kostengünstig den Farbton des so erhaltenen Testfarbprodukts, der dem des sich durch Aufbringen der Farbrezeptur durch das Zielapplikationsverfahren auf das Zielsubstrat ergebenden Farbprodukts entspricht, anzuschauen und zu bewerten.

Häufig handelt es sich bei dem von dem Benutzer beabsichtigten Farbprodukt nicht lediglich um ein mit einer Farbe versehenes Substrat, sondern beispielsweise um ein entsprechendes Farbprodukt, bei dem abschließend, nachdem die Farbrezeptur mit dem vorgegebenen Applikationsverfahren auf das vorgegebene Substrat aufgebracht worden ist, ein Überlack oder Primer aufgebracht worden ist. Wenn der Überlack oder Primer nicht farbneutral ist, wie beispielsweise im Falle von Mattlacken, Effektlacken, haptische Lacken, Duftlacken, verändert er den Farbton des Farbprodukts zumindest geringfügig. Selbst wenn der Überlack oder Primer farbneutral ist, beeinflusst der Überlack oder Primer den Glanz des Farbprodukts. Um diese Effekte bei dem Verfahren zu berücksichtigen, ist es bevorzugt, dass zumindest ein Teil der Datensätze, wie beispielsweise wenigstens 10% und bevorzugt wenigstens 30% der Datensätze auch Angaben zu einem Überlack oder Primer enthalten, wobei der in dem jeweilige Datensatz gespeicherte Farbton derjenige des Farbprodukts ist, welches erhalten wird, indem die in dem Datensatz gespeicherte Farbrezeptur mit dem in dem Datensatz gespeicherten Applikationsverfahren auf das in dem Datensatz gespeicherte Substrat gedruckt wird und dann der in dem Datensatz gespeicherte Überlack oder Primer aufgebracht wird. So wird sichergestellt, dass auch im Falle der Anwendung eines Überlacks oder Primers mit dem erfindungsgemäßen Verfahren eine Farbrezeptur ermittelt wird, die mit der vorgegebenen Toleranz den gewünschten Farbton für das den Überlack oder Primer enthaltenden Farbprodukt ergibt.

Aus den vorstehenden Gründen ist es bevorzugt, dass das bei der erfindungsgemäßen Datenverarbeitungsvorrichtung eingesetzte Computerprogramm so ausgestaltet ist, dass der Benutzer in dem Schritt b) einen Überlack oder Primer sowie eine Menge für den aufzubringenden Überlack oder Primer vorgeben kann und in dem Schritt c) die Datenbank durchsucht wird, ob diese mindestens einen Datensatz enthält, dessen gespeicherte Farbrezeptur mit einer vorgegebenen maximalen Toleranz den vorgegebenen Farbton ergibt, wenn die in dem Datensatz gespeicherte Farbrezeptur mit dem in dem Schritt b) vorgegebene Zielapplikationsverfahren auf das in dem Schritt b) vorgegebene Zielsubstrat appliziert wird und danach der in dem Schritt b) vorgegebene Überlack oder Primer in der vorgegebenen Menge aufgebracht wird.

Diese Ausführungsform ist insbesondere auch für Druckfarben bevorzugt, wobei dann der Überlack ein Überdrucklack ist, das Applikationsverfahren ein Druckverfahren ist und das Substrat ein Papier, Karton, Blech oder eine Kunststofffolie ist.

Neben Druckfarben eignet sich das erfindungsgemäße Verfahren insbesondere auch für Leder- und Textilfärbeprozesse, so dass das Applikationsverfahren insbesondere ein Lederfärbeprozess oder ein Textilfärbeprozess und das Substrat ein Leder oder ein Textil sein kann.

Gemäß einer weiteren besonders bevorzugten Ausführungsform der vorliegenden Erfindung ist es vorgesehen, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens eines der folgenden Charakteristika enthält:
i) ein oder mehrere Halbtöne des Farbprodukts,
ii) Glanzstufe des Farbprodukts,
iii) verschiedene Glanzstufen bei verschiedenen Betrachtungswinkeln des Farbprodukts,
iv) haptische (d.h. durch Tasten wahrnehmbare) Eigenschaften des Farbprodukts,
v) Kratzfestigkeit des Farbprodukts,
vi) Reißfestigkeit des Farbprodukts,
vii) Zugfestigkeit des Farbprodukts,
viii) Beständigkeit des Farbprodukts gegenüber Licht,
ix) Beständigkeit des Farbprodukts gegenüber Temperatur,
x) Beständigkeit des Farbprodukts gegenüber gamma-Strahlen,
xi) Beständigkeit des Farbprodukts gegenüber Chemikalien,
xii) Beständigkeit des Farbprodukts gegenüber Pasteurisation,
xiii) Beständigkeit des Farbprodukts gegenüber Sterilisation,
xiv) Beständigkeit des Farbprodukts gegenüber Feuchtigkeit,
xv) Beständigkeit des Farbprodukts gegenüber Delamination,
xvi) Abwesenheit von bestimmten Inhaltsstoffen in der Farbrezeptur,
xvii) Opazität des Farbprodukts,
xviii) Gleiteigenschaften des Farbprodukts.

Das Farbprodukt ist wiederum das Produkt, welches erhalten wird durch Applikation der Farbrezeptur, über die in dem entsprechenden Datensatz Informationen enthalten sind, mit dem Applikationsverfahren auf das Substrat, über welche in dem entsprechenden Datensatz Informationen enthalten sind.

Gemäß einer weiteren Ausführungsform der vorliegenden Erfindung handelt es sich um einen Textilfärbeprozess, für den vorgesehen ist, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens eines der folgenden Charakteristika enthält:
i) Anti-statische Ausrüstung,
ii) Flammschutzausrüstung,
iii) Wasserabweisung,
iv) Ölabweisung,
v) Hydrophilierung,
vi) Fixierung,
vii) Appretur,
viii) Avivage,
ix) Beschichtung mit Wachs,
x) Beschichtung mit Fluorcarbonharzen,
xi) Lichtechtheit,
xii) Waschbeständigkeit,
xiii) Reibechtheit.

Gemäß einer weiteren Ausführungsform der vorliegenden Erfindung handelt es sich um einen Lederfärbeprozess, für den vorgesehen ist, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens eines der folgenden Charakteristika enthält:
i) Polyurethan-Zurichtung,
ii) Anilin-Zurichtung,
iii) Nitrocellulosezurichtung,
iv) Imprägnierung,
v) Prägung,
vi) Öl-Zurichtung,
vii) Wachs-Zurichtung,
viii) Lackierung (Öl-Lack),
ix) Lackierung (Kaltlack),
x) Lichtechtheit,
xi) Reibechtheit,
xii) Schmutzabweisung,
xiii) Glanz.

Diese drei zuletzt genannten Ausführungsformen erlauben es, mit der erfindungsgemäßen Datenverarbeitungsvorrichtung nicht nur eine Farbrezeptur zu ermitteln, die mit dem gewünschten Zielapplikationsverfahren auf das gewünschte Zielsubstrat aufgebracht ein Farbprodukt mit dem gewünschten Zielfarbton ergibt, sondern insbesondere auch eine entsprechende Farbrezeptur zu ermitteln, welche die gewünschten weiteren Eigenschaften aufweist, wie eine gewünschte Chemikalienbeständigkeit, zu einem gewünschten Glanz des Farbprodukts führt oder dergleichen.

Zur Umsetzung dieser Ausführungsform ist es zudem bevorzugt, dass das bei der erfindungsgemäßen Datenverarbeitungsvorrichtung eingesetzte Computerprogramm so ausgestaltet ist, dass der Benutzer in dem Schritt b) zusätzlich wenigstens eines der Charakteristika i) bis xviii) für Druckverfahren, bzw. i) bis xiii) für Textilien und Leder vorgeben kann.

Um die Vorteile für diese Ausführungsform in erhöhtem Maße zu erzielen, wird es in Weiterbildung des Erfindungsgedankens vorgeschlagen, dass wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens drei, bevorzugt wenigstens fünf, besonders bevorzugt wenigstens 10, ganz besonders bevorzugt wenigstens 15 und höchst bevorzugt alle der Charakteristika i) bis xviii) enthalten und vorzugsweise der Benutzer diese in Schritt b) vorgeben kann.

In Weiterbildung des Erfindungsgedankens wird es vorgeschlagen, dass wenigstens 10%, bevorzugt wenigstens 50%, besonders bevorzugt wenigstens 80%, weiter bevorzugt wenigstens 90%, ganz besonders bevorzugt wenigstens 95% und höchst bevorzugt alle der in der Datenbank enthaltenen Datensätze bei drei verschiedenen Winkeln, bevorzugt bei 20°, bei 60° und bei 85°, mindestens jedoch bei 60° in Bezug auf die Oberfläche des Farbprodukts, bestimmte Glanzwerte enthalten, und, dass der Benutzer in dem Schritt b) Werte für die bei den drei verschiedenen Winkeln für das Farbprodukt zu erzielenden Zielglanzwerte vorgeben kann. Bei dieser Ausführungsform ist es insbesondere bevorzugt, dass die Glanzwerte zumindest zwischen glänzend, halbmatt und matt abgestuft sind. Beispielsweise können Mattlacke Glanzwerten zwischen 0 und 24 entsprechen, Halbmattlacke Glanzwerten zwischen 25 und 50 entsprechen und Glanzlacke Glanzwerten über 51 entsprechen.

Die Glanzwerte werden entsprechend der DIN 67530/ ISO 2813 gemessen und die Lacke beispielsweise mit einem 6µm-Rakel aufgebracht.

Gemäß einer weiteren ganz besonders bevorzugten Ausführungsform der vorliegenden Erfindung ist es vorgesehen, dass wenigstens 10%, bevorzugt wenigstens 50%, besonders bevorzugt wenigstens 80%, weiter bevorzugt wenigstens 90%, ganz besonders bevorzugt wenigstens 95% und höchst bevorzugt alle der in der Datenbank enthaltenen Datensätze Informationen über mindestens einen Halbton umfassen, wobei diese Informationen zumindest Informationen über den Farbton enthalten, den das Farbprodukt aufweist, das erhalten wird, wenn die Farbrezeptur, über die in dem entsprechenden Datensatz Informationen gespeichert sind, als Halbton mit dem Zielapplikationsverfahren auf das Zielsubstrat appliziert wird. Dies ermöglicht eine Aussage darüber, wie der gewünschte Farbton im Vollton und in den einzelnen Abstufungen/Halbtönen erscheint bzw. welche Spektralkurven sich entsprechend ergeben. Dies ist bevorzugt, um optisch als auch spektral gleiche Farbtöne, die aus mehreren verschiedenen Pigment-Kombinationen gemischt wurden, in den Halbtönen unterscheiden zu können. Die Volltöne können optisch und spektral gleich erscheinen, aber in den Halbtönen werden unterschiedliche Farbtöne/-orte erhalten, wenn unterschiedliche Pigmentkombinationen vorliegen.

Bei dieser Ausführungsform ist es insbesondere bevorzugt, dass die entsprechenden Datensätze entsprechende Informationen über mindestens zwei Halbtöne, bevorzugt über mindestens 4 Halbtöne und besonders bevorzugt mindestens 6 Halbtöne umfasst, wobei die Informationen über jeden der mindestens zwei Halbtöne zumindest Informationen über den jeweiligen Farbton enthalten, den das jeweilige Farbprodukt aufweist, das erhalten wird, wenn die Farbrezeptur, über die in dem entsprechenden Datensatz Informationen gespeichert sind, als jeweiliger Halbton mit dem Zielapplikationsverfahren auf das Zielsubstrat appliziert wird. Vorzugsweise decken die Halbtöne, über welche Informationen in dem jeweiligen Datensatz enthalten sind, mindestens 25%, besonders bevorzugt mindestens 50%, ganz besonders bevorzugt mindestens 75% und höchst bevorzugt den gesamten Halbtonbereich ab.

Zur Umsetzung dieser Ausführungsform ist es zudem bevorzugt, dass das bei der erfindungsgemäßen Datenverarbeitungsvorrichtung eingesetzte Computerprogramm so ausgestaltet ist, dass der Benutzer in dem Schritt b) Werte sowohl für den Vollton als auch für mindestens einen Halbton vorgeben (messen, einlesen) kann.

Insbesondere am Anfang des Aufbaus der für die erfindungsgemäße Datenverarbeitungsvorrichtung eingesetzten Datenbank, in der diese noch nicht Datensätze für alle möglichen Kombinationen an Applikationsverfahren, Substrat und Farbton nebst den etwaigen weiteren optionalen Charakteristika i) bis xviii) für Druckverfahren, bzw. i) bis xiii) für Textilien und Leder enthält, wird es unvermeidlich sein, dass für eine spezielle Kombination von in dem Schritt b) eingegebenen Zielapplikationsverfahren, Zielsubstrat und Zielfarbton in dem Verfahrensschritt c) kein geeigneter Datensatz gefunden wird. Um auch in diesem Fall dem Benutzer eine Farbrezeptur anzugeben, mit der er sein gewünschtes Projekt durchführen kann, wird es in Weiterbildung des Erfindungsgedankens vorgeschlagen, dass das Computerprogramm einen Rezeptieralgorithmus umfasst, welcher es erlaubt, eine Farbrezeptur zu errechnen, welche nach der Applikation mit dem vorgegebenen Zielapplikationsverfahren auf das vorgegebene Zielsubstrat mit einer vorgegebenen maximalen Toleranz den für das Zielfarbprodukt vorgegebenen Farbton ergibt.

Vorzugsweise ist das Computerprogramm so ausgestaltet, dass der die Farbrezeptur errechnende Rezeptieralgorithmus durchgeführt wird, wenn in dem Schritt c) kein geeigneter Datensatz gefunden wurde.

Ferner ist es bevorzugt, dass vor dem Durchführen des die Farbrezeptur errechnenden Rezeptieralgorithmus von dem Computerprogramm in Bezug auf die Vorgaben des Benutzers geeignete Komponenten für die Farbrezeptur an den Rezeptieralgorithmus übertragen werden, aus denen allein der Rezeptieralgorithmus die Farbrezeptur errechnet. Unter Komponenten für die Farbrezeptur werden dabei Rohstoffe, Halbfertigprodukte und/oder Fertigprodukte verstanden, die in der Datenbank zusammen mit deren Eigenschaften und Farbeigenschaften gespeichert sind. Diese Ausführungsform ermöglicht es, dass eine Farbrezeptur errechnet wird, mit welcher der Benutzer nicht nur den gewünschten Zielfarbton erhält, sondern welche insbesondere auch die weiteren vorgegebenen Charakteristika, wie ein oder mehrere der Charakteristika i) bis xviii) für Druckverfahren, bzw. i) bis xiii) für Textilien und Leder erfüllt. Gibt beispielsweise der Benutzer in dem Schritt b) eine bestimmten zu erzielende Chemikalienbeständigkeit beispielsweise gegenüber Säuren vor, übertragt das Computerprogramm nur diejenigen Komponenten, also Rohstoffe, Halbfertigprodukte und/oder Fertigprodukte, an den Rezeptieralgorithmus weiter, welche diese Chemikalienbeständigkeit aufweisen.

Bei der vorstehenden Ausführungsform der vorliegenden Erfindung ist es zudem bevorzugt, dass die von dem Computerprogramm an den Rezeptieralgorithmus übertragenen Komponenten für die Farbrezeptur insbesondere wenigstens einen, bevorzugt wenigstens drei, weiter bevorzugt wenigstens fünf, besonders bevorzugt wenigstens zehn, ganz besonders bevorzugt wenigstens fünfzehn und höchst bevorzugt alle der von dem Benutzer vorgegebenen Kriterien i) bis xviii) für Druckverfahren, bzw. i) bis xiii) für Textilien und Leder erfüllen.

Gemäß einer weiteren ganz besonders bevorzugten Ausführungsform der vorliegenden Erfindung ist es vorgesehen, dass wenigstens 40%, weiter bevorzugt wenigstens 60%, ganz besonders bevorzugt wenigstens 80% und höchst bevorzugt alle der Datensätze auch Informationen über die Spektralkurve der Oberfläche eines ersten Produktionsfarbprodukts umfassen, welches erhalten worden ist durch beispielsweise Aufstreichen eines Teils einer ersten Produktionscharge der in dem Schritt d) angezeigten Farbrezeptur auf ein weißes Aufstrichpapier und Aufnehmen einer Spektralkurve, zwischen 400 und 700 nm der Oberfläche hiervon mit einem Spektralphotometer.

Bei jeder weiteren Produktionscharge kann dann nämlich zur Qualitätskontrolle ein Teil der weiteren Produktionscharge der Farbrezeptur auf dasselbe Aufstrichpapier aufgestrichen werden von der Oberfläche des so erhaltenen Farbprodukts eine Spektralkurve unter den gleichen Bedingungen aufgenommen werden, wie dies für die erste Produktionscharge erfolgt ist. Die so erhaltene Spektralkurve muss dann lediglich mit der im dem Datensatz gespeicherten Spektralkurve verglichen werden. Wenn die bei diesem Vergleich erhaltene Abweichung in einem vorgegebenen Toleranzbereich liegt, kann die Charge freigegeben werden. Andernfalls muss diese so lange durch Zugabe einer oder mehrerer Bestandteile korrigiert werden, bis für ein damit hergestelltes Referenzfarbprodukt ein im Toleranzbereich liegender Farbton erhalten wird.

In Weiterbildung des Erfindungsgedankens wird es vorgeschlagen, dass bei dieser Ausführungsform wenigstens 10%, weiter bevorzugt wenigstens 20%, besonders bevorzugt wenigstens 40%, noch weiter bevorzugt wenigstens 60%, ganz besonders bevorzugt wenigstens 80% und höchst bevorzugt alle der Datensätze auch die Spektralkurve der Oberfläche eines zweiten Produktionsfarbprodukts umfassen, welches erhalten worden ist durch beispielsweise Aufstreichen eines Teils einer zweiten Produktionscharge der in dem Schritt d) angezeigten Farbrezeptur auf ein weißes Aufstrichpapier und Aufnehmen einer Spektralkurve zwischen 180 und 4000 nm, bevorzugt zwischen 400 und 700 nm der Oberfläche hiervon mit einem Spektralphotometer. Die zweite Produktionscharge kann außer mit Aufstreichen auch mit jedem anderen Applikationsverfahren auf das Substrat, vorzugsweise Papier, aufgebracht werden, wie beispielsweise mit Laborandrucken oder Rakelaufzügen.

Zudem ist es bei dieser Ausführungsform der vorliegenden Erfindung bevorzugt, dass die Datensätze zusätzlich zu der Spektralkurve des zweiten Produktionsfarbprodukts die Spektralkurve eines mit einer Rückstellprobe der ersten Produktionscharge hergestellten Farbprodukts umfassen, welches erhalten worden ist durch Aufstreichen eines Teils einer Rückstellprobe der ersten Produktionscharge der in dem Schritt d) angezeigten Farbrezeptur auf ein weißes Aufstrichpapier und Aufnehmen einer Spektralkurve zwischen 180 und 4000 nm, bevorzugt zwischen 400 und 700 nm der Oberfläche hiervon mit einem Spektralphotometer gleichzeitig mit dem Aufstreichen und Aufnehmen der Spektralkurve des Teils der zweiten Produktionscharge der in dem Schritt d) angezeigten Farbrezeptur. Indem beide Proben gleichzeitig auf dasselbe weiße Aufstrichpapier aufgestrichen und verglichen wurden, lässt sich die Genauigkeit der Qualitätskontrolle noch weiter erhöhen.

Ein weiterer Gegenstand der vorliegenden Offenbarung ist eine Datenbank zum Ermitteln einer Farbrezeptur, welche nach der Applikation mit einem vorgegebenen Applikationsverfahren auf ein vorgegebenes Substrat ein Farbprodukt mit einem vorgegebenen Farbton ergibt, wobei in der Datenbank eine Vielzahl von Datensätzen gespeichert ist, wobei jeder der Datensätze jeweils zumindest Informationen über eine Farbrezeptur, über ein Substrat, über ein Applikationsverfahren und über den Farbton des sich nach der Applikation der Farbrezeptur mit dem Applikationsverfahren auf das Substrat ergebenden Farbprodukts umfasst. Zumindest einer der Datensätze umfasst auch Informationen über wenigstens einen Referenzfarbton, ein Referenzapplikationsverfahren sowie ein Referenzsubstrat, wobei sich der Referenzfarbton ergibt, wenn die Farbrezeptur, über die in dem Datensatz Informationen enthalten sind, mit dem Referenzapplikationsverfahren auf das Referenzsubstrat appliziert wird, wobei das Referenzapplikationsverfahren von dem Applikationsverfahren, über das in dem Datensatz Informationen enthalten sind, und/oder das Referenzsubstrat von dem Substrat, über das in dem Datensatz Informationen enthalten sind, verschieden ist

Vorzugsweise umfasst die Datenbank mehr als 10 Datensätze, weiter bevorzugt mehr als 100 Datensätze, noch weiter bevorzugt mehr als 1.000 Datensätze, besonders bevorzugt mehr als 10.000 Datensätze, besonders bevorzugt mehr als 100.000 Datensätze, ganz besonders bevorzugt mehr als 500.000 Datensätze und höchst bevorzugt eine Million Datensätze oder mehr.

In Weiterbildung des Erfindungsgedankens wird es vorgeschlagen, dass wenigstens 50%, besonders bevorzugt wenigstens 80%, weiter bevorzugt wenigstens 90%, ganz besonders bevorzugt wenigstens 95% und höchst bevorzugt alle der Datensätze Informationen über wenigstens einen Referenzfarbton umfassen.

Ein weiterer Gegenstand der vorliegenden Offenbarung ist ein System zum Ermitteln einer Farbrezeptur, welche nach der Applikation mit einem vorgegebenen Applikationsverfahren auf ein vorgegebenes Substrat ein Farbprodukt mit einem vorgegebenen Farbton ergibt, insbesondere zum Durchführen des vorstehend beschriebenen Verfahrens, wobei das System umfasst:
a) eine zuvor beschriebene Datenbank,
b) ein Computerprogramm, das so programmiert ist, dass es einem Benutzer erlaubt, ein Zielapplikationsverfahren, ein Zielsubstrat sowie einen gewünschten, sich nach der Applikation einer Farbrezeptur mit dem vorgegebenen Zielapplikationsverfahren auf das vorgegebene Zielsubstrat für das erhaltene Farbprodukt ergebenden Zielfarbton in das Computerprogramm einzugeben,
c) wobei das Computerprogramm auch so programmiert ist, dass es die Datenbank durchsuchen kann, um zu ermitteln, ob die Datenbank mindestens einen Datensatz enthält, dessen Farbrezeptur, über die in dem Datensatz Informationen enthalten sind, nach der Applikation mit dem in dem Schritt b) vorgegebenen Zielapplikationsverfahren auf das in dem Schritt b) vorgegebene Zielsubstrat ein Farbprodukt mit einem Farbton ergibt, der dem in dem Schritt b) vorgegebenen Zielfarbton entspricht oder maximal mit einer vorgegebenen Toleranz von diesem abweicht, und
d) wobei das Computerprogramm auch so programmiert ist, dass es dem Benutzer, wenn in dem Schritt c) mindestens ein geeigneter Datensatz gefunden wird, die in dem mindestens einem Datensatz gespeicherten Informationen über die Farbrezeptur anzeigt.

## Patentansprüche

1. Datenverarbeitungsvorrichtung zum Ermitteln einer Farbrezeptur und zur Qualitätskontrolle der hergestellten Farbrezeptur, welche nach der Applikation mit einem vorgegebenen Applikationsverfahren auf ein vorgegebenes Substrat ein Farbprodukt mit einem vorgegebenen Farbton ergibt, wobei die Datenverarbeitungsvorrichtung Mittel zur Ausführung eines Verfahrens zum Ermitteln einer Farbrezeptur und zur Qualitätskontrolle der hergestellten Farbrezeptur umfasst, welche nach der Applikation mit einem vorgegebenen Applikationsverfahren auf ein vorgegebenes Substrat ein Farbprodukt mit einem vorgegebenen Farbton ergibt, wobei das Verfahren umfasst:
a) Bereitstellen einer Datenbank, in der eine Vielzahl von Datensätzen gespeichert ist, wobei jeder der Datensätze jeweils zumindest Informationen über eine Farbrezeptur, über ein Substrat, über ein Applikationsverfahren und über den Farbton des sich nach der Applikation der Farbrezeptur mit dem Applikationsverfahren auf das Substrat ergebenden Farbprodukts umfasst,
b) Aufnahme der Eingabe durch einen Benutzer eines vorgegebenen Zielapplikationsverfahrens, eines vorgegebenen Zielsubstrates sowie eines vorgegebenen Zielfarbtons, sowie eines vorgegebenen gewünschten, sich nach der Applikation einer Farbrezeptur mit dem vorgegebenen Zielapplikationsverfahren auf das vorgegebene Zielsubstrat für das erhaltene Farbprodukt ergebenden Zielfarbtons,
c) Durchsuchen der Datenbank mit einem Computerprogramm, ob diese mindestens einen Datensatz enthält, dessen Farbrezeptur nach der Applikation mit dem in dem Schritt b) vorgegebenen Zielapplikationsverfahren auf das in dem Schritt b) vorgegebene Zielsubstrat ein Farbprodukt mit einem Farbton ergibt, der dem in dem Schritt b) vorgegebenen Zielfarbton entspricht oder maximal mit einer vorgegebenen Toleranz von diesem abweicht, und
d) wenn in dem Schritt c) mindestens ein geeigneter Datensatz gefunden wird, Anzeigen der in dem mindestens einem Datensatz gespeicherten Informationen über die Farbrezeptur,
wobei zumindest 50% der Datensätze auch Informationen über wenigstens einen Referenzfarbton, ein Referenzapplikationsverfahren sowie ein Referenzsubstrat umfassen, wobei sich der Referenzfarbton ergibt, wenn die Farbrezeptur mit dem Referenzapplikationsverfahren auf das Referenzsubstrat appliziert wird, wobei das Referenzapplikationsverfahren von dem Applikationsverfahren des Datensatzes verschieden ist und/oder das Referenzsubstrat von dem Substrat des Datensatzes verschieden ist, wobei:
i) das Referenzsubstrat ein in der Norm DIN ISO 2846-1: 2017 spezifiziertes Normpapier ist, wobei die Datenverarbeitungsvorrichtung das aufgenommene Farbtonsignal des durch Aufbringen der hergestellten Farbrezeptur mit dem Referenzapplikationsverfahren auf das Normpapier hergestellten Referenzfarbprodukts mit dem Referenzfarbton des Datensatzes vergleicht, oder
ii) wenigstens 40% der Datensätze auch Informationen über die Spektralkurve der Oberfläche eines ersten Produktionsfarbprodukts umfassen, welches erhalten worden ist durch Aufstreichen eines Teils einer ersten Produktionscharge der in dem Schritt d) angezeigten Farbrezeptur auf ein weißes Aufstrichpapier und Aufnehmen einer Spektralkurve zwischen 400 und 700 nm der Oberfläche hiervon mit einem Spektralphotometer,
wobei die Datenverarbeitungsvorrichtung die von der von der Oberfläche aufgenommene Spektralkurve zwischen 400 und 700 nm des so erhaltenen Farbprodukts nach Aufstreichen der hergestellten Farbrezeptur auf dasselbe Aufstrichpapier mit der in dem Datensatz gespeicherten Spektralkurve vergleicht.

2. Datenverarbeitungsvorrichtung nach Anspruch 1, **dadurch gekennzeichnet, dass** die Mittel zur Ausführung des Verfahrens nach Anspruch 1 umfassen:
a) eine Datenbank, in der eine Vielzahl von Datensätzen gespeichert ist, wobei jeder der Datensätze jeweils zumindest Informationen über eine Farbrezeptur, über ein Substrat, über ein Applikationsverfahren und über den Farbton des sich nach der Applikation der Farbrezeptur mit dem Applikationsverfahren auf das Substrat ergebenden Farbprodukts umfasst, wobei zumindest 50% Datensätze auch Informationen über wenigstens einen Referenzfarbton, ein Referenzapplikationsverfahren sowie ein Referenzsubstrat umfasst, wobei sich der Referenzfarbton ergibt, wenn die Farbrezeptur mit dem Referenzapplikationsverfahren auf das Referenzsubstrat appliziert wird, wobei das Referenzapplikationsverfahren von dem Applikationsverfahren des Datensatzes Informationen enthalten sind, und/oder das Referenzsubstrat von dem Substrat des Datensatzes verschieden ist, wobei das Referenzsubstrat ein in der Norm DIN ISO 2846-1: 2017 spezifiziertes Normpapier ist und die Datenbank mehr als 100 Datensätze umfasst,
b) ein Computerprogramm, das so programmiert ist, dass es einem Benutzer erlaubt, ein Zielapplikationsverfahren, ein Zielsubstrat sowie einen gewünschten, sich nach der Applikation einer Farbrezeptur mit dem vorgegebenen Zielapplikationsverfahren auf das vorgegebene Zielsubstrat für das erhaltene Farbprodukt ergebenden Zielfarbton in das Computerprogramm einzugeben,
c) wobei das Computerprogramm auch so programmiert ist, dass es die Datenbank durchsuchen kann, um zu ermitteln, ob die Datenbank mindestens einen Datensatz enthält, dessen Farbrezeptur nach der Applikation mit dem in dem Schritt b) vorgegebenen Zielapplikationsverfahren auf das in dem Schritt b) vorgegebene Zielsubstrat ein Farbprodukt mit einem Farbton ergibt, der dem in dem Schritt b) vorgegebenen Zielfarbton entspricht oder maximal mit einer vorgegebenen Toleranz von diesem abweicht, und
d) wobei das Computerprogramm auch so programmiert ist, dass es dem Benutzer, wenn in dem Schritt c) mindestens ein geeigneter Datensatz gefunden wird, die in dem mindestens einem Datensatz gespeicherten Informationen über die Farbrezeptur anzeigt.

3. Datenverarbeitungsvorrichtung nach Anspruch 1 oder 2, **dadurch gekennzeichnet, dass** wenigstens 50%, bevorzugt wenigstens 80%, weiter bevorzugt wenigstens 90%, ganz besonders bevorzugt wenigstens 95% und höchst bevorzugt alle der Datensätze Informationen über wenigstens einen Referenzfarbton sowie das dazu gehörige Referenzapplikationsverfahren und das dazu gehörige Referenzsubstrat umfassen.

4. Datenverarbeitungsvorrichtung nach zumindest einem der vorhergehenden Ansprüche, **dadurch gekennzeichnet, dass** die Informationen über den wenigstens einen Referenzfarbton Daten einer Spektralkurve umfassen, die erhalten worden ist, indem die in dem jeweiligen Datensatz gespeicherte Farbrezeptur mit dem Referenzapplikationsverfahren auf das Referenzsubstrat appliziert worden ist und dann von der Oberfläche des so erhaltenen Farbprodukts mit einem Spektrophotometer über einen Wellenlängenbereich von 180 bis 4000 nm und bevorzugt von 400 bis 700 nm eine Spektralkurve aufgenommen worden ist.

5. Datenverarbeitungsvorrichtung nach zumindest einem der vorhergehenden Ansprüche, **dadurch gekennzeichnet, dass** das Computerprogramm so ausgestaltet ist, dass der Benutzer in dem Schritt b) das Zielsubstrat auf mindestens eine und bevorzugt alle der folgenden Weisen vorgeben kann:
i) Übertragen der Daten einer mit einem Spektrophotometer zwischen 180 und 4000 nm und bevorzugt zwischen 400 und 700 nm aufgenommenen Spektralkurve des Zielsubstrats in das Computerprogramm,
ii) Anklicken des Zielsubstrats aus einer in dem Computerprogramm gespeicherten Sammlung von Vorauswahlen für verschiedene Substrate,
iii) Eingeben oder Einlesen der Werte einer Spektralkurve des Zielsubstrats,
iv) Eingeben oder Einlesen der Lab-Werte des Zielsubstrats,
und/oder
der Benutzer in dem Schritt b) den Zielfarbton auf mindestens eine und bevorzugt alle der folgenden Weisen vorgeben kann:
i) Übertragen der Daten einer mit einem Spektrophotometer zwischen 180 und 4000 nm und bevorzugt zwischen 400 und 700 nm aufgenommenen Spektralkurve des Zielfarbtons in das Computerprogramm,
ii) Anklicken des Zielfarbtons aus einer in dem Computerprogramm gespeicherten Sammlung von Vorauswahlen für verschiedene Farbtöne,
iii) Eingeben oder Einlesen der Werte einer Spektralkurve des Zielfarbtons,
iv) Eingeben oder Einlesen der Lab-Werte des Zielfarbtons.

6. Datenverarbeitungsvorrichtung nach zumindest einem der vorhergehenden Ansprüche, **dadurch gekennzeichnet, dass** in dem Computerprogramm eine Toleranz für den Schritt c) voreingestellt ist und/oder der Benutzer die Toleranz für den Schritt c) stufenlos oder gemäß Voreinstellungen einstellen kann, wobei die maximale Toleranz in dem Schritt c) einem ΔE₀₀-Wert von maximal 1, bevorzugt von maximal 0,5 und besonders bevorzugt von maximal 0,2 entspricht.

7. Datenverarbeitungsvorrichtung nach zumindest einem der vorhergehenden Ansprüche, **dadurch gekennzeichnet, dass** das Computerprogramm einen Testalgorithmus umfasst, welcher einen Farbton simulieren kann, welcher nach dem Ausdrucken der Simulation mit einem Computer über einen Testpapierdrucker auf ein Testpapiersubstrat denselben Farbton ergibt, wie die Applikation der in dem Schritt c) gefundenen Farbrezeptur mit dem in dem Schritt b) vorgegebenen Zielapplikationsverfahren auf das in dem Schritt b) vorgegebene Zielsubstrat, wobei das Computerprogramm so ausgestaltet ist, dass der Benutzer einen Testpapierdrucker sowie ein Testpapiersubstrat vorgeben kann.

8. Datenverarbeitungsvorrichtung nach zumindest einem der vorstehenden Ansprüche, **dadurch gekennzeichnet, dass** zumindest ein Teil der Datensätze auch Angaben zu einem Überlack und/oder Primer enthält, wobei der in dem jeweilige Datensatz gespeicherte Farbton derjenige des Farbprodukts ist, welches erhalten wird, indem die in dem Datensatz gespeicherte Farbrezeptur mit dem in dem Datensatz gespeicherten Applikationsverfahren auf das in dem Datensatz gespeicherte Substrat gedruckt wird und dann der in dem Datensatz gespeicherte Überlack aufgebracht wird, und das Computerprogramm so ausgestaltet ist, dass der Benutzer in dem Schritt b) einen Überlack sowie eine Menge für den aufzubringenden Überlack vorgeben kann.

9. Datenverarbeitungsvorrichtung nach zumindest einem der vorstehenden Ansprüche, **dadurch gekennzeichnet, dass** wenigstens 10%, bevorzugt wenigstens 25%, weiter bevorzugt wenigstens 50%, noch weiter bevorzugt wenigstens 75%, ganz besonders bevorzugt wenigstens 90% und höchst bevorzugt alle der Datensätze auch Informationen über wenigstens eines der folgenden Charakteristika enthält:
i) ein oder mehrere Halbtöne,
ii) Glanzstufe des Farbprodukts,
iii) verschiedene Glanzstufen bei verschiedenen Betrachtungswinkeln des Farbprodukts,
iv) haptische Eigenschaften des Farbprodukts,
v) Kratzfestigkeit des Farbprodukts,
vi) Reißfestigkeit des Farbprodukts,
vii) Zugfestigkeit des Farbprodukts,
viii) Beständigkeit des Farbprodukts gegenüber Licht,
ix) Beständigkeit des Farbprodukts gegenüber Temperatur,
x) Beständigkeit des Farbprodukts gegenüber gamma-Strahlen,
xi) Beständigkeit des Farbprodukts gegenüber Chemikalien,
xii) Beständigkeit des Farbprodukts gegenüber Pasteurisation,
xiii) Beständigkeit des Farbprodukts gegenüber Sterilisation,
xiv) Beständigkeit des Farbprodukts gegenüber Feuchtigkeit,
xv) Beständigkeit des Farbprodukts gegenüber Delamination,
xvi) Abwesenheit von bestimmten Inhaltsstoffen in der Farbrezeptur,
xvii) Opazität des Farbprodukts,
xviii) Gleiteigenschaften des Farbprodukts.

10. Datenverarbeitungsvorrichtung nach Anspruch 9, **dadurch gekennzeichnet, dass** wenigstens 10%, bevorzugt wenigstens 50%, besonders bevorzugt wenigstens 80%, weiter bevorzugt wenigstens 90%, ganz besonders bevorzugt wenigstens 95% und höchst bevorzugt alle der in der Datenbank enthaltenen Datensätze Informationen über mindestens zwei Halbtöne umfassen, wobei die Informationen über jeden der mindestens zwei Halbtöne zumindest Informationen über den jeweiligen Farbton enthalten, den das jeweilige Farbprodukt aufweist, das erhalten wird, wenn die Farbrezeptur als jeweiliger Halbton mit dem Zielapplikationsverfahren auf das Zielsubstrat appliziert wird.

11. Datenverarbeitungsvorrichtung nach zumindest einem der vorstehenden Ansprüche, **dadurch gekennzeichnet, dass** das Computerprogramm einen Rezeptieralgorithmus umfasst, welcher es erlaubt, eine Farbrezeptur zu errechnen, welche nach der Applikation mit dem vorgegebenen Zielapplikationsverfahren auf das vorgegebene Zielsubstrat mit einer vorgegebenen maximalen Toleranz den für das Zielfarbprodukt vorgegebenen Farbton ergibt, wobei das Computerprogramm so ausgestaltet, dass der die Farbrezeptur errechnende Rezeptieralgorithmus durchgeführt wird, wenn in dem Schritt c) kein geeigneter Datensatz gefunden wurde, und vor dem Durchführen des die Farbrezeptur errechnenden Rezeptieralgorithmus von dem Computerprogramm in Bezug auf die Vorgaben des Benutzers geeignete Komponenten für die Farbrezeptur an den Rezeptieralgorithmus übertragen werden, aus denen allein der Rezeptieralgorithmus die Farbrezeptur errechnet.

## Claims

1. A data processing device for determining a color formulation and for controlling the quality of the produced color formulation which, after the application by a specified application process to a specified substrate, results in a color product having a specified hue, the data processing device comprising means for performing a method for determining a color formulation and for controlling the quality of the produced color formulation, which, after the application by a specified application process to a specified substrate, results in a color product having a specified hue, the method comprising:
a) providing a database in which a plurality of data sets is stored, wherein each of the data sets respectively comprises at least information on a color formulation, on a substrate, on an application process and on the hue of the color product resulting after the application of the color formulation by the application process to the substrate,
b) recording the input by a user of a specified target application process, a specified target substrate and a specified target hue, as well as a specified desired target hue resulting after the application of a color formulation by the specified target application process to the specified target substrate for the color product obtained,
c) searching the database by means of a computer program as to whether it contains at least one data set whose color formulation, after the application by the target application process specified in step b) to the target substrate specified in step b), results in a color product with a hue that corresponds to the target hue specified in step b) or deviates from it by a maximum of a specified tolerance, and
d) displaying, if at least one suitable data set is found in step c), the information on the color formulation stored in the at least one data set,
wherein at least 50% of the data sets also comprise information on at least one reference hue, a reference application process, and a reference substrate, wherein the reference hue is obtained when the color formulation is applied to the reference substrate by the reference application process, wherein the reference application process is different from the application process of the data set and/or the reference is different from the substrate of the data set, wherein:
i) the reference substrate is a standardized paper specified in the DIN ISO 2846-1: 2017 standard, wherein the data processing device compares the recorded hue signal of the reference color product produced by applying the produced color formulation to the standardized paper by the reference application process with the reference hue of the data set, or
ii) at least 40% of the data sets also comprise information on the spectral curve of the surface of a first production color product obtained by coating a portion of a first production batch of the color formulation indicated in step d) onto a white coating paper and recording a spectral curve between 400 and 700 nm of the surface thereof with a spectrophotometer, wherein the data processing device compares the spectral curve recorded from the surface between 400 and 700 nm of the color product thus obtained after coating the produced color formulation onto the same coating paper with the spectral curve stored in the data set.

2. The data processing device according to claim 1, **characterized in that** the means for performing the method according to claim 1 comprise:
a) a database, in which a plurality of data sets are stored, each of the data sets respectively comprising at least information on a color formulation, on a substrate, on an application process and on the hue of the color product resulting after the application of the color formulation by the application process to the substrate, wherein at least 50% of the data sets also comprise information on at least one reference hue, a reference application process and a reference substrate, wherein the reference hue is obtained when the color formulation is applied to the reference substrate by the reference application process, wherein the reference application process is different from the application process for which information are contained in the data set, and/or the reference substrate is different from the substrate of the data set, wherein the reference substrate is a standardized paper specified in the DIN ISO 2846-1: 2017 standard and the database comprises more than 100 data sets,
b) a computer program programmed to allow a user to enter a target application process, a target substrate and a desired target hue resulting after the application of a color formulation by the specified target application process to the specified target substrate for the obtained color product into the computer program,
c) wherein the computer program is also programmed to be able to search the database to determine whether the database contains at least one data set whose color formulation, after the application by the target application process specified in step b) to the target substrate specified in step b), results in a color product with a hue which corresponds to the target hue specified in step b) or deviates from it by a maximum of a specified tolerance, and
d) wherein the computer program is also programmed to display to the user the information on the color formulation stored in the at least one data set, if at least one suitable data set is found in step c).

3. The data processing device according to claim 1 or 2, **characterized in that** at least 50%, preferably at least 80%, more preferably at least 90%, very particularly preferably at least 95% and most preferably all of the data sets comprise information on at least one reference hue as well as the associated reference application process and the associated reference substrate.

4. The data processing device according to at least one of the preceding claims, **characterized in that** the information on the at least one reference hue comprises data of a spectral curve which has been obtained by applying the color formulation stored in the respective data set to the reference substrate by the reference application process and then recording a spectral curve from the surface of the color product thus obtained by a spectrophotometer over a wavelength range from 180 to 4000 nm, and preferably from 400 to 700 nm.

5. The data processing device according to at least one of the preceding claims **characterized in that** the computer program is configured such that the user can specify the target substrate in step b) in at least one and preferably all of the following ways:
i) transmitting the data of a spectral curve of the target substrate recorded with a spectrophotometer between 180 and 4000 nm, and preferably between 400 and 700 nm, into the computer program,
ii) clicking on the target substrate from a collection of preselections for different substrates stored in the computer program,
iii) entering or reading the values of a spectral curve of the target substrate,
iv) entering or reading the laboratory values of the target substrate, and/or the user can specify in step b) the target hue in at least one and preferably all of the following ways:
i) transmitting the data of a spectral curve of the target hue recorded with a spectrophotometer between 180 and 4000 nm and preferably between 400 and 700 nm into the computer program,
ii) clicking on the target hue from a collection of preselections for different hues stored in the computer program,
iii) entering or reading the values of a spectral curve of the target hue,
iv) entering or reading the laboratory values of the target hue.

6. The data processing device according to at least one of the preceding claims **characterized in that** a tolerance for step c) is preset in the computer program and/or the user can continuously set the tolerance for step c) or according to presettings, wherein the maximum tolerance in step c) corresponds to an ΔE₀₀ value of a maximum of 1, preferably of a maximum of 0.5, and particularly preferably of a maximum of 0.2.

7. The data processing device according to at least one of the preceding claims **characterized in that** the computer program comprises a test algorithm which can simulate a hue resulting in the same hue after printing the simulation with a computer by means of a test paper printer onto a test paper substrate, as the application of the color formulation found in step c) by the target application process specified in step b) to the target substrate specified in step b), wherein the computer program is configured such that the user can specify a test paper printer as well as a test paper substrate.

8. The data processing device according to at least one of the preceding claims **characterized in that** at least a part of the data sets also contain information on a topcoat and/or a primer, wherein the hue stored in the respective data set corresponds to that of the color product which is obtained by printing the color formulation stored in the data set by the application process stored in the data set onto the substrate stored in the data set and then applying the topcoat stored in the data set, and the computer program is configured such that the user can specify a topcoat and an amount for the topcoat to be applied in step b).

9. The data processing device according to at least one of the preceding claims, **characterized in that** at least 10%, preferably at least 25%, more preferably at least 50%, even more preferably at least 75%, very particularly preferably at least 90%, and most preferably all of the data sets also contain information on at least one of the following characteristics:
i) one or more halftones,
ii) gloss level of the color product,
iii) different gloss levels at different viewing angles of the color product,
iv) haptic properties of the color product,
v) scratch resistance of the color product,
vi) tear strength of the color product,
vii) tensile strength of the color product,
viii) resistance of the color product to light,
ix) resistance of the color product to temperature,
x) resistance of the color product to gamma rays,
xi) resistance of the color product to chemicals,
xii) resistance of the color product to pasteurization,
xiii) resistance of the color product to sterilization,
xiv) resistance of the color product to humidity,
xv) resistance of the color product to delamination,
xvi) absence of specific ingredients in the color formulation,
xvii) opacity of the color product,
xvii) sliding properties of the color product.

10. The data processing device according to claim 9, **characterized in that** at least 10%, preferably at least 50%, particularly preferably at least 80%, more preferably at least 90%, very particularly preferably at least 95% and most preferably all of the data sets contained in the database comprise information on at least two halftones wherein the information on each of the at least two halftones contains at least information on the respective hue that the respective color product exhibits which is obtained when the color formulation as the respective halftone is applied to the target substrate by the target application process.

11. The data processing device according to at least one of the preceding claims, **characterized in that** the computer program comprises a formulation algorithm which allows to calculate a color formulation which, after the application by the specified target application process to the specified target substrate with a specified maximum tolerance, results in the hue specified for the target color product wherein the computer program is configured such that the formulation algorithm calculating the color formulation is carried out, if no suitable data set has been found in step c), and before executing the formulation algorithm calculating the color formulation, suitable components for the color formulation are transmitted from the computer program to the formulation algorithm with respect to the user's specifications from which alone the formulation algorithm calculates the color formulation.

## Revendications

1. Dispositif de traitement de données pour déterminer une formulation de couleur et pour le contrôle de qualité de la formulation de couleur produite, qui, après application avec une procédure d'application prédéterminée sur un substrat prédéterminé, donne un produit de couleur avec une teinte prédéterminée, dans lequel le dispositif de traitement de données comprend des moyens pour exécuter une procédure pour déterminer une formulation de couleur et pour le contrôle de qualité de la formulation de couleur produite, qui, après application avec une procédure d'application prédéterminée sur un substrat prédéterminé, donne un produit de couleur avec une teinte prédéterminée, dans lequel la procédure consiste à :
a) fournir une base de données dans laquelle un grand nombre d'ensembles de données sont stockés, dans lequel chacun des ensembles de données contient au moins des informations sur une formulation de couleur, sur un substrat, sur un procédé d'application et sur la teinte du produit de couleur obtenu après l'application de la formulation de couleur avec le procédé d'application sur le substrat,
b) enregistrer la saisie par un utilisateur d'une procédure d'application cible prédéfinie, d'un substrat cible prédéfini et d'une teinte cible prédéfinie, ainsi que d'une teinte cible prédéfinie souhaitée résultant de l'application d'une recette de couleur avec la procédure d'application cible prédéfinie sur le substrat cible prédéfini pour le produit de couleur obtenu,
c) rechercher dans la base de données à l'aide d'un programme informatique s'il contient au moins un ensemble de données dont la formulation de couleur donne, après l'application avec la méthode d'application cible prédéterminée à l'étape b) sur le substrat cible prédéterminé à l'étape b), un produit de couleur avec une teinte correspondant à la teinte cible prédéterminée à l'étape b) ou s'en écartant au maximum avec une tolérance prédéterminée, et
d) si au moins un ensemble de données approprié est trouvé à l'étape c), afficher les informations sur la formulation de la couleur stockées dans l'au moins un ensemble de données,
dans lequel au moins 50 % des ensembles de données comprennent également des informations sur au moins une teinte de référence, une méthode d'application de référence et un substrat de référence, dans lequel la teinte de référence est obtenue lorsque la formulation de couleur est appliquée au substrat de référence avec la méthode d'application de référence, dans lequel la méthode d'application de référence est différente de la méthode d'application de l'ensemble de données et/ou le substrat de référence étant différent du substrat de l'ensemble de données, dans lequel :
i) le substrat de référence est conforme à la norme DIN ISO 2846-1 : 2017 spécifiée, dans lequel le dispositif de traitement des données compare le signal de teinte enregistré du produit de couleur de référence produit par l'application de la formulation de couleur produite avec la méthode d'application de référence sur le papier standard à la teinte de référence de l'ensemble de données, ou
ii) au moins 40 % des ensembles de données contiennent également des informations sur la courbe spectrale de la surface d'un premier produit de couleur de production, qui a été obtenu en étalant une partie d'un premier lot de production de la recette de couleur indiquée à l'étape d) sur un papier à tartiner blanc et en enregistrant une courbe spectrale comprise entre 400 et 700 nm de la surface de celui-ci avec un spectrophotomètre,
dans lequel le dispositif de traitement de données compare la courbe spectrale capturée par la surface entre 400 et 700 nm du produit coloré ainsi obtenu après application de la formule colorante préparée sur le même papier à enduire avec la courbe spectrale stockée dans l'ensemble de données.

2. Dispositif de traitement de données selon la revendication 1, **caractérisé en ce que** les moyens pour mettre en œuvre le procédé selon la revendication 1 comprennent :
a) une base de données dans laquelle est stockée une multitude de jeux de données, dans lequel chacun des jeux de données contient au moins des informations sur une formulation de couleur, sur un substrat, sur un procédé d'application et sur la teinte du produit de couleur résultant de l'application de la formulation de couleur avec le procédé d'application sur le substrat, dans lequel au moins 50 % des jeux de données contient également des informations sur au moins une teinte de référence, un procédé d'application de référence ainsi qu'un substrat de référence, dans lequel la teinte de référence est obtenue lorsque la formulation de couleur est appliquée sur le substrat de référence avec le procédé d'application de référence, dans lequel le procédé d'application de référence contient des informations sur le procédé d'application du jeu de données, et/ou le substrat de référence étant différent du substrat du jeu de données, dans lequel le substrat de référence est conforme à la norme DIN ISO 2846-1 : 2017 spécifiée et la base de données comprend plus de 100 enregistrements,
b) un programme informatique programmé de manière à permettre à un utilisateur d'entrer dans le programme informatique une méthode d'application cible, un substrat cible ainsi qu'une teinte cible souhaitée résultant de l'application d'une formulation de couleur avec la méthode d'application cible prédéterminée sur le substrat cible prédéterminé pour le produit de couleur obtenu,
c) dans lequel le programme informatique est également programmé pour pouvoir effectuer des recherches dans la base de données afin de déterminer si la base de données contient au moins un ensemble de données dont la formulation de couleur donne, après l'application de la méthode d'application cible prédéterminée à l'étape b) sur le substrat cible prédéterminé à l'étape b), un produit de couleur avec une teinte correspondant à la teinte cible prédéterminée à l'étape b) ou qui diffère de celle-ci au maximum avec une tolérance prédéterminée, et
d) dans lequel le programme informatique est également programmé pour afficher à l'utilisateur, si au moins un ensemble de données approprié est trouvé à l'étape c), les informations sur la formulation de la couleur stockées dans l'au moins un ensemble de données.

3. Dispositif de traitement de données selon la revendication 1 ou 2, **caractérisé en ce qu'**au moins 50 %, de préférence au moins 80 %, de manière plus préférée au moins 90 %, de manière particulièrement préférée au moins 95 % et de manière très préférée tous les ensembles de données comprennent des informations sur au moins une teinte de référence ainsi que le procédé d'application de référence associé et le substrat de référence associé.

4. Dispositif de traitement de données selon au moins l'une quelconque des revendications précédentes, **caractérisé en ce que** les informations sur ladite au moins une teinte de référence comprennent des données d'une courbe spectrale obtenue en appliquant la formulation de couleur stockée dans l'ensemble de données respectif au substrat de référence à l'aide de la méthode d'application de référence, puis en capturant une courbe spectrale à partir de la surface du produit de couleur ainsi obtenu à l'aide d'un spectrophotomètre sur une plage de longueurs d'onde de 180 à 4000 nm, de préférence de 400 à 700 nm.

5. Dispositif de traitement de données selon au moins l'une des revendications précédentes, **caractérisé en ce que** le programme informatique est agencé de sorte que, à l'étape b), l'utilisateur puisse prédéfinir le substrat cible d'au moins une et de préférence de toutes les manières suivantes :
i) transférer les données d'une courbe spectrale du substrat cible prise avec un spectrophotomètre entre 180 et 4000 nm et de préférence entre 400 et 700 nm dans le programme informatique,
ii) cliquer sur le substrat cible à partir d'une collection de présélections stockées dans le programme informatique pour différents substrats,
iii) saisir ou lire les valeurs d'une courbe spectrale du substrat cible,
iv) saisir ou lire les valeurs Lab du substrat cible,
et/ou
à l'étape b), l'utilisateur peut spécifier la teinte cible d'au moins une et de préférence de toutes les manières suivantes :
i) transférer les données d'une courbe spectrale de la teinte cible prise avec un spectrophotomètre entre 180 et 4000 nm et de préférence entre 400 et 700 nm dans le programme informatique,
ii) cliquer sur la teinte cible à partir d'une collection de présélections stockées dans le programme informatique pour différentes teintes,
iii) saisir ou lire les valeurs d'une courbe spectrale de la teinte cible,
iv) saisir ou lire les valeurs Lab de la teinte cible.

6. Dispositif de traitement de données selon au moins l'une quelconque des revendications précédentes, **caractérisé en ce qu'**une tolérance pour l'étape c) est préréglée dans le programme informatique et/ou l'utilisateur peut régler la tolérance pour l'étape c) en continu ou selon des préréglages, dans lequel la tolérance maximale à l'étape c) correspond à une valeur ΔE₀₀ de 1 au maximum, de préférence de 0,5 au maximum et de manière particulièrement préférée de 0,2 au maximum.

7. Dispositif de traitement de données selon au moins l'une quelconque des revendications précédentes, **caractérisé en ce que** le programme informatique comprend un algorithme de test qui peut simuler une teinte qui, après l'impression de la simulation avec un ordinateur via une imprimante à papier test sur un substrat de papier test, donne la même teinte que l'application de la formulation de couleur trouvée à l'étape c) avec la méthode d'application cible prédéfinie à l'étape b) sur le substrat cible prédéfini à l'étape b), dans lequel le programme informatique est conçu de sorte que l'utilisateur puisse prédéfinir une imprimante à papier test ainsi qu'un substrat à papier test.

8. Dispositif de traitement de données selon au moins l'une quelconque des revendications précédentes, **caractérisé en ce qu'**au moins une partie des enregistrements de données contient également des informations sur une couche de finition et/ou un apprêt, dans lequel la teinte stockée dans l'enregistrement de données respectif est celle du produit de couleur, qui est obtenue en imprimant la recette de couleur stockée dans l'enregistrement de données avec la méthode d'application stockée dans l'enregistrement de données sur le substrat stocké dans l'enregistrement de données, puis en appliquant la couche de finition stockée dans l'enregistrement de données, et le programme informatique étant conçu de sorte que l'utilisateur puisse spécifier une couche de finition ainsi qu'une quantité pour la couche de finition à appliquer à l'étape b).

9. Dispositif de traitement de données selon au moins l'une quelconque des revendications précédentes, **caractérisé en ce qu'**au moins 10 %, de préférence au moins 25 %, de manière encore plus préférée au moins 50 %, de manière encore plus préférée au moins 75 %, de manière particulièrement préférée au moins 90 % et de manière très préférée tous les jeux de données contiennent également des informations sur au moins l'une des caractéristiques suivantes :
i) un ou plusieurs demi-tons,
ii) niveau de brillance du produit coloré,
iii) différents niveaux de brillance à différents angles de vue du produit de couleur,
iv) propriétés haptiques du produit de couleur,
v) résistance aux rayures du produit de couleur,
vi) résistance à la déchirure du produit de couleur,
vii) résistance à la traction du produit de couleur,
viii) résistance du produit de couleur à la lumière,
ix) résistance du produit de couleur à la température,
x) résistance du produit de couleur aux rayons gamma,
xi) résistance du produit de couleur aux produits chimiques,
xii) résistance du produit de couleur à la pasteurisation,
xiii) résistance du produit de couleur à la stérilisation,
xiv) résistance du produit de couleur à l'humidité,
xv) résistance du produit coloré au délaminage,
xvi) absence de certains ingrédients dans la formulation de la couleur,
xvii) opacité du produit de couleur,
xviii) propriétés de glissement du produit de couleur.

10. Dispositif de traitement de données selon la revendication 9, **caractérisé en ce qu'**au moins 10 %, de préférence au moins 50 %, de manière particulièrement préférée au moins 80 %, de manière particulièrement préférée au moins 90 %, de manière particulièrement préférée au moins 95 % et de manière très préférée tous les jeux de données contenus dans la base de données contiennent des informations sur au moins deux demi-tons, dans lequel les informations sur chacun des au moins deux demi-tons contient au moins des informations sur la teinte respective que présente le produit de couleur respectif, qui est obtenu lorsque la recette de couleur est appliquée sur le substrat cible en tant que demi-ton respectif avec le procédé d'application cible.

11. Dispositif de traitement de données selon au moins l'une quelconque des revendications précédentes, **caractérisé en ce que** le programme informatique comprend un algorithme de formulation qui permet de calculer une formulation de couleur qui, après l'application avec la méthode d'application cible prédéterminée sur le substrat cible prédéterminé avec une tolérance maximale prédéterminée, donne la teinte prédéterminée pour le produit de couleur cible, dans lequel le programme informatique est conçu de sorte que l'algorithme de formulation calculant la formulation de couleur est exécuté si aucun ensemble de données approprié n'a été trouvé à l'étape c), et avant d'exécuter l'algorithme de formulation calculant la formulation de couleur, des composants appropriés pour la formulation de couleur par rapport aux spécifications de l'utilisateur sont transmis par le programme informatique à l'algorithme de formulation de couleur, à partir desquels seul l'algorithme de formulation de couleur calcule la formulation de couleur.
